(19) 

Europäisches
Patentamt

European
Patent Office

Office européen
des brevets

(11) **EP 4 661 580 A1**

(12) **EUROPEAN PATENT APPLICATION**
published in accordance with Art. 153(4) EPC

(43) Date of publication:
**10.12.2025 Bulletin 2025/50**

(21) Application number: **24756018.8**

(22) Date of filing: **01.02.2024**

(51) International Patent Classification (IPC):
***H04W 74/08*** (2024.01)

(52) Cooperative Patent Classification (CPC):
**H04W 74/00; H04W 74/08; H04W 74/0833;
H04W 84/06**

(86) International application number:
**PCT/CN2024/075291**

(87) International publication number:
**WO 2024/169644 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310182890**

(71) Applicant: **Huawei Technologies Co., Ltd.
Shenzhen, Guangdong 518129 (CN)**

(72) Inventors:
- **CHEN, Ying
  Shenzhen, Guangdong 518129 (CN)**
- **YANG, Ruonan
  Shenzhen, Guangdong 518129 (CN)**
- **ZHAO, Feiran
  Shenzhen, Guangdong 518129 (CN)**
- **TIE, Xiaolei
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **RANDOM ACCESS METHOD AND APPARATUS, AND SYSTEM**

(57)     This application provides a random access method, an apparatus, and a system, and is applied to the wireless communication field. The random access method provided in this application includes: receiving first control information, where the first control information indicates a first reserved resource and a number of repetitions of first feedback information, the number of repetitions of the first feedback information is greater than or equal to 1, the first feedback information indicates a decoding result of a message B MsgB or a decoding result of a message 4 Msg4, the first reserved resource is one of one or more reserved resources, and each of the one or more reserved resources is used for sending the first feedback information once; and determining the one or more reserved resources based on the first control information. According to the random access method provided in this application, repetition of the first feedback information can be implemented, and coverage enhancement can be performed on a channel that carries the first feedback information, that is, a channel that carries feedback information of the MsgB/Msg4.

FIG. 5

## Description

This application claims priority to Chinese Patent Application No. 202310182890.1, filed with the China National Intellectual Property Administration on February 17, 2023 and entitled "RANDOM ACCESS METHOD, APPARATUS, AND SYSTEM", which is incorporated herein by reference in its entirety.

## TECHNICAL FIELD

This application relates to the wireless communication field, and in particular, to a random access method, an apparatus, and a system.

## BACKGROUND

In a wireless communication system, compared with terrestrial communication, satellite communication has a longer communication distance and a larger path loss, resulting in a lower link budget. In view of this, further coverage enhancement needs to be performed, so that a terminal device on the ground can be directly connected to a base station deployed on a satellite.

## SUMMARY

Embodiments of this application provide a random access method, an apparatus, and a system, to perform coverage enhancement on a channel that carries feedback information corresponding to a Msg4/MsgB.

To achieve the foregoing objective, the following technical solutions are used in embodiments of this application.

According to a first aspect, a random access method is provided. The method may be performed by a second communication apparatus. The second communication apparatus may be a terminal device, or may be a component (for example, a processor, a chip, or a chip system) of the terminal device. The following uses an example in which the second communication apparatus performs the method for description. The method includes: The second communication apparatus receives first control information, where the first control information indicates a first reserved resource and a number of repetitions of first feedback information, the number of repetitions of the first feedback information is greater than or equal to 1, the first feedback information indicates a decoding result of a message B MsgB or a decoding result of a message 4 Msg4, the first reserved resource is one of one or more reserved resources, a number of the one or more reserved resources is the same as the number of repetitions of the first feedback information, and each of the one or more reserved resources is used for sending the first feedback information once. The second communication apparatus determines the one or more reserved resources based on the first control information.

According to the random access method provided in this embodiment of this application, the second communication apparatus can determine, based on the first control information, the number of repetitions of the first feedback information and the reserved resource used to send the first feedback information, so that repetition of the first feedback information can be implemented, and coverage enhancement can be performed on a channel that carries the first feedback information, that is, a channel that carries feedback information of the MsgB/Msg4.

With reference to the first aspect, in a possible design, the method further includes: The second communication apparatus receives the MsgB or the Msg4, and then sends the first feedback information through the one or more reserved resources. According to this solution, the second communication apparatus can send the first feedback information through the reserved resource, to enhance coverage of the channel that carries the first feedback information.

With reference to the first aspect, in a possible design, the method further includes: The second communication apparatus sends first indication information, where the first indication information indicates a capability of repetition of the first feedback information. According to this solution, the second communication apparatus can indicate the capability of repetition of the first feedback information by the second communication apparatus, so that a first communication apparatus can indicate an appropriate number of repetitions of the first feedback information based on the capability of the second communication apparatus.

With reference to the first aspect, in a possible design, the method further includes: The second communication apparatus sends second indication information, where the second indication information indicates to request for repetition of the first feedback information. According to this solution, the second communication apparatus can request to perform repetition on the first feedback information to a first communication apparatus, so that the first communication apparatus determines that the second communication apparatus can perform repetition on the first feedback information.

With reference to the first aspect, in a possible design, that the second indication information indicates to request for repetition of the first feedback information includes: The second indication information indicates a requested number of repetitions of the first feedback information. According to this solution, the second communication apparatus can indicate, to the first communication apparatus, the number, requested by the second communication apparatus, of repetitions of the first feedback information, so that the first communication apparatus can indicate an appropriate number of repetitions of the first feedback information.

With reference to the first aspect, in a possible design, the first control information includes third indication information, the third indication information is used to determine a first index and a second index, the first index is an index corresponding to a first resource, the second index is an index corresponding to the first reserved resource, and the number of repetitions of the first feedback information is the same as a number of symbols of the first resource. According to this solution, the first reserved resource and the number of repetitions of the first feedback information can be indicated by using one piece of information, thereby reducing signaling overheads.

With reference to the first aspect, in a possible design, the method further includes: The second communication apparatus determines the first index based on the third indication information, determines the first resource based on the first index, and when the number of symbols of the first resource is less than a first preset threshold, determines the second index based on the first index. According to this solution, the third indication information can implicitly indicate a number of repetitions of the first feedback information by using the first index to indicate the first resource with a smaller number of symbols.

With reference to the first aspect, in a possible design, the first control information includes fourth indication information and fifth indication information, the fourth indication information indicates the number of repetitions of the first feedback information, and the fifth indication information indicates the first reserved resource. According to this solution, the first reserved resource and the number of repetitions of the first feedback information can be respectively indicated by using two pieces of information.

With reference to the first aspect, in a possible design, the method further includes: The second communication apparatus receives sixth indication information, where the sixth indication information indicates one or more candidate numbers of repetitions. That the fourth indication information indicates the number of repetitions of the first feedback information includes: The fourth indication information is an index corresponding to the number of repetitions of the first feedback information in the one or more candidate numbers of repetitions. According to this solution, the first communication apparatus can directly send the index to indicate the number of repetitions of the first feedback information, thereby reducing signaling overheads.

With reference to the first aspect, in a possible design, sizes of all the reserved resources are the same.

With reference to the first aspect, in a possible design, a position relationship between a reserved resource other than the first reserved resource in the plurality of reserved resources and the first reserved resource in time domain and/or frequency domain corresponds to the number of repetitions of the first feedback information. According to this solution, the second communication apparatus can determine another reserved resource based on the position relationship and the first reserved resource.

With reference to the first aspect, in a possible design, the method further includes: The second communication apparatus receives seventh indication information, where the seventh indication information indicates a correspondence between the position relationship and the number of repetitions of the first feedback information.

With reference to the first aspect, in a possible design, the plurality of reserved resources meet at least one of the following relationships:

in the plurality of reserved resources, two time-frequency resources that are adjacent in time domain are consecutive in time domain;
in the plurality of reserved resources, two reserved resources that are adjacent in frequency domain are consecutive in frequency domain;
in the plurality of reserved resources, intervals between two reserved resources that are adjacent in time domain are the same; and
in the plurality of reserved resources, intervals between two reserved resources that are adjacent in frequency domain are the same.

With reference to the first aspect, in a possible design, the method further includes: The second communication apparatus receives eighth indication information, where the eighth indication information indicates the interval between the two reserved resources that are adjacent in time domain and/or the interval between the two reserved resources that are adjacent in frequency domain.

According to a second aspect, a random access method is provided. The method may be performed by a first communication apparatus. The first communication apparatus may be a network device, or may be performed by a component (for example, a processor, a chip, or a chip system) of the network device. The following uses an example in which the first communication apparatus performs the method for description. The method includes: The first communication apparatus determines first control information, where the first control information indicates a first reserved resource and a number of repetitions of first feedback information, the number of repetitions of the first feedback information is greater than or equal to 1, the first feedback information indicates a decoding result of a message B MsgB or a decoding result of a message 4 Msg4, the first reserved resource is one of one or more reserved resources, a number of the one or more reserved resources is the same as the number of repetitions of the first feedback information, and each of the one or more reserved resources is used for transmitting the first feedback information once. The first communication apparatus sends the first control information.

According to the random access method provided in this embodiment of this application, the first communication apparatus can indicate, by using the first control information, the number of repetitions of the first feedback information and the reserved resource used to send the first feedback information, so that the first feedback information can be repeatedly received, and coverage enhancement can be performed on a channel that carries the first feedback information, that is, a channel that carries feedback information of the MsgB/Msg4.

With reference to the second aspect, in a possible design, the method further includes: The first communication apparatus sends the MsgB or the Msg4. Then, the first communication apparatus receives the first feedback information through the one or more reserved resources. According to this solution, the first communication apparatus can receive the first feedback information through the reserved resource, to enhance coverage of the channel that carries the first feedback information.

With reference to the second aspect, in a possible design, the method further includes: The first communication apparatus receives first indication information, where the first indication information indicates a capability of repetition of the first feedback information. According to this solution, the first communication apparatus can determine the capability of repetition of the first feedback information by a second communication apparatus, to indicate an appropriate number of repetitions of the first feedback information.

With reference to the second aspect, in a possible design, the method further includes: The first communication apparatus receives second indication information, where the second indication information indicates to request for repetition of the first feedback information. According to this solution, the first communication apparatus can determine that a second communication apparatus can perform repetition on the first feedback information.

With reference to the second aspect, in a possible design, that the second indication information indicates to request for repetition of the first feedback information includes: The second indication information indicates a requested number of repetitions of the first feedback information. According to this solution, the first communication apparatus can determine the number, requested by the second communication apparatus, of repetitions of the first feedback information, to determine an appropriate number of repetitions of the first feedback information.

With reference to the second aspect, in a possible design, the first control information includes third indication information, the third indication information is used to determine a first index and a second index, the first index is an index corresponding to a first resource, the second index is an index corresponding to the first reserved resource, and the number of repetitions of the first feedback information is the same as a number of symbols of the first resource. According to this solution, the first reserved resource and the number of repetitions of the first feedback information can be indicated by using one piece of information, thereby reducing signaling overheads.

With reference to the second aspect, in a possible design, the first control information includes fourth indication information and fifth indication information, the fourth indication information indicates the number of repetitions of the first feedback information, and the fifth indication information indicates the first reserved resource. According to this solution, the first reserved resource and the number of repetitions of the first feedback information can be respectively indicated by using two pieces of information.

With reference to the second aspect, in a possible design, the method further includes: The first communication apparatus sends sixth indication information, where the sixth indication information indicates one or more candidate numbers of repetitions. That the fourth indication information indicates the number of repetitions of the first feedback information includes: The fourth indication information is an index corresponding to the number of repetitions of the first feedback information in the one or more candidate numbers of repetitions. According to this solution, the second communication apparatus can directly send the index to indicate the number of repetitions of the first feedback information, thereby reducing signaling overheads.

With reference to the second aspect, in a possible design, sizes of all the reserved resources are the same.

With reference to the second aspect, in a possible design, a position relationship between a reserved resource other than the first reserved resource in the plurality of reserved resources and the first reserved resource in time domain and/or frequency domain corresponds to the number of repetitions of the first feedback information. According to this solution, the second communication apparatus can determine another reserved resource based on the position relationship and the first reserved resource.

With reference to the second aspect, in a possible design, the method further includes: The first communication apparatus sends seventh indication information, where the seventh indication information indicates a correspondence between the position relationship and the number of repetitions of the first feedback information.

With reference to the second aspect, in a possible design, the plurality of reserved resources meet at least one of the following relationships:

in the plurality of reserved resources, two reserved resources that are adjacent in time domain are consecutive in time domain;

in the plurality of reserved resources, two reserved resources that are adjacent in frequency domain are consecutive in frequency domain;

in the plurality of reserved resources, intervals between two reserved resources that are adjacent in time domain are the same; and

in the plurality of reserved resources, intervals between two reserved resources that are adjacent in frequency domain are the same.

With reference to the second aspect, in a possible design, the method further includes: The first communication apparatus sends eighth indication information, where the eighth indication information indicates the interval between the two reserved resources that are adjacent in time domain and/or the interval between the two reserved resources that are adjacent in frequency domain.

According to a third aspect, a communication apparatus is provided, configured to implement the method according to the first aspect. The communication apparatus may be the second communication apparatus in the first aspect, an apparatus including the second communication apparatus, or an apparatus included in the second communication apparatus, for example, a chip.

The communication apparatus includes a corresponding module, unit, or means (means) for implementing the foregoing method. The module, unit, or means may be implemented by hardware, software, or hardware executing corresponding software. The hardware or software includes one or more modules or units corresponding to the foregoing functions.

With reference to the third aspect, in a possible design, the communication apparatus includes a transceiver module and a processing module. The transceiver module is configured to receive first control information, where the first control information indicates a first reserved resource and a number of repetitions of first feedback information, the number of repetitions of the first feedback information is greater than or equal to 1, the first feedback information indicates a decoding result of a message B MsgB or a decoding result of a message 4 Msg4, the first reserved resource is one of one or more reserved resources, a number of the one or more reserved resources is the same as the number of repetitions of the first feedback information, and each of the one or more reserved resources is used for sending the first feedback information once. The processing module is configured to determine the one or more reserved resources based on the first control information.

With reference to the third aspect, in a possible design, the transceiver module is further configured to: receive the MsgB or the Msg4; and send the first feedback information through the one or more reserved resources.

With reference to the third aspect, in a possible design, the transceiver module is further configured to send first indication information, where the first indication information indicates a capability of repetition of the first feedback information.

With reference to the third aspect, in a possible design, the transceiver module is further configured to send second indication information, where the second indication information indicates to request for repetition of the first feedback information.

With reference to the third aspect, in a possible design, that the second indication information indicates to request for repetition of the first feedback information includes: The second indication information indicates a requested number of repetitions of the first feedback information.

With reference to the third aspect, in a possible design, the first control information includes third indication information, the third indication information is used to determine a first index and a second index, the first index is an index corresponding to a first resource, the second index is an index corresponding to the first reserved resource, and the number of repetitions of the first feedback information is the same as a number of symbols of the first resource.

With reference to the third aspect, in a possible design, the processing module is further configured to: determine the first index based on the third indication information, and determine the first resource based on the first index; and when the number of symbols of the first resource is less than a first preset threshold, determine the second index based on the first index.

With reference to the third aspect, in a possible design, the first control information includes fourth indication information and fifth indication information, the fourth indication information indicates the number of repetitions of the first feedback information, and the fifth indication information indicates the first reserved resource.

With reference to the third aspect, in a possible design, the transceiver module is further configured to receive sixth indication information, where the sixth indication information indicates one or more candidate numbers of repetitions. That the fourth indication information indicates the number of repetitions of the first feedback information includes: The fourth indication information is an index corresponding to the number of repetitions of the first feedback information in the one or more candidate numbers of repetitions.

With reference to the third aspect, in a possible design, sizes of all the reserved resources are the same.

With reference to the third aspect, in a possible design, a position relationship between a reserved resource other than the first reserved resource in the plurality of reserved resources and the first reserved resource in time domain and/or frequency domain corresponds to the number of repetitions of the first feedback information.

With reference to the third aspect, in a possible design, the transceiver module is further configured to receive seventh indication information, where the seventh indication information indicates a correspondence between the position relationship and the number of repetitions of the first feedback information.

With reference to the third aspect, in a possible design, the plurality of reserved resources meet at least one of the following relationships:

in the plurality of reserved resources, two time-frequency resources that are adjacent in time domain are consecutive in time domain;
in the plurality of reserved resources, two reserved resources that are adjacent in frequency domain are consecutive in frequency domain;
in the plurality of reserved resources, intervals between two reserved resources that are adjacent in time domain are the same; and
in the plurality of reserved resources, intervals between two reserved resources that are adjacent in frequency domain are the same.

With reference to the third aspect, in a possible design, the transceiver module is further configured to receive eighth indication information, where the eighth indication information indicates the interval between the two reserved resources that are adjacent in time domain and/or the interval between the two reserved resources that are adjacent in frequency domain.

According to a fourth aspect, a communication apparatus is provided, configured to implement the method according to the second aspect. The communication apparatus may be the first communication apparatus in the second aspect, an apparatus including the first communication apparatus, or an apparatus included in the first communication apparatus, for example, a chip.

The communication apparatus includes a corresponding module, unit, or means (means) for implementing the foregoing method. The module, unit, or means may be implemented by hardware, software, or hardware executing corresponding software. The hardware or software includes one or more modules or units corresponding to the foregoing functions.

With reference to the fourth aspect, in a possible design, the apparatus includes a transceiver module and a processing module. The processing module is configured to determine first control information, where the first control information indicates a first reserved resource and a number of repetitions of first feedback information, the number of repetitions of the first feedback information is greater than or equal to 1, the first feedback information indicates a decoding result of a message B MsgB or a decoding result of a message 4 Msg4, the first reserved resource is one of one or more reserved resources, a number of the one or more reserved resources is the same as the number of repetitions of the first feedback information, and each of the one or more reserved resources is used for transmitting the first feedback information once. The transceiver module is configured to send the first control information.

With reference to the fourth aspect, in a possible design, the transceiver module is further configured to: send the MsgB or the Msg4; and receive the first feedback information through the one or more reserved resources.

With reference to the fourth aspect, in a possible design, the transceiver module is further configured to receive first indication information, where the first indication information indicates a capability of repetition of the first feedback information.

With reference to the fourth aspect, in a possible design, the transceiver module is further configured to receive second indication information, where the second indication information indicates to request for repetition of the first feedback information.

With reference to the fourth aspect, in a possible design, that the second indication information indicates to request for repetition of the first feedback information includes: The second indication information indicates a requested number of repetitions of the first feedback information.

With reference to the fourth aspect, in a possible design, the first control information includes third indication information, the third indication information is used to determine a first index and a second index, the first index is an index corresponding to a first resource, the second index is an index corresponding to the first reserved resource, and the number of repetitions of the first feedback information is the same as a number of symbols of the first resource.

With reference to the fourth aspect, in a possible design, the first control information includes fourth indication information and fifth indication information, the fourth indication information indicates the number of repetitions of the first feedback information, and the fifth indication information indicates the first reserved resource.

With reference to the fourth aspect, in a possible design, the transceiver module is further configured to send sixth indication information, where the sixth indication information indicates one or more candidate numbers of repetitions. That the fourth indication information indicates the number of repetitions of the first feedback information includes: The fourth indication information is an index corresponding to the number of repetitions of the first feedback information in the one or more candidate numbers of repetitions.

With reference to the fourth aspect, in a possible design, sizes of all the reserved resources are the same.

With reference to the fourth aspect, in a possible design, a position relationship between a reserved resource other than the first reserved resource in the plurality of reserved resources and the first reserved resource in time domain and/or frequency domain corresponds to the number of repetitions of the first feedback information.

With reference to the fourth aspect, in a possible design, the transceiver module is further configured to send seventh indication information, where the seventh indication information indicates a correspondence between the position relationship and the number of repetitions of the first feedback information.

With reference to the fourth aspect, in a possible design, the plurality of reserved resources meet at least one of the following relationships:

in the plurality of reserved resources, two reserved resources that are adjacent in time domain are consecutive in time domain;
in the plurality of reserved resources, two reserved resources that are adjacent in frequency domain are consecutive in frequency domain;
in the plurality of reserved resources, intervals between two reserved resources that are adjacent in time domain are the same; and
in the plurality of reserved resources, intervals between two reserved resources that are adjacent in frequency domain are the same.

With reference to the fourth aspect, in a possible design, the transceiver module is further configured to send eighth indication information, where the eighth indication information indicates the interval between the two reserved resources that are adjacent in time domain and/or the interval between the two reserved resources that are adjacent in frequency domain.

According to a fifth aspect, a communication apparatus is provided, including a processor. The processor is configured to execute instructions stored in a memory, and when the processor executes the instructions, the communication apparatus is enabled to perform the method according to any one of the foregoing aspects. The communication apparatus may be the second communication apparatus in the first aspect. Alternatively, the communication apparatus may be the first communication apparatus in the second aspect.

In a possible design, the communication apparatus further includes the memory, and the memory is configured to store computer instructions. Optionally, the processor and the memory are integrated together, or the processor and the memory are separately disposed.

In a possible design, the memory is coupled to the processor, and is outside the communication apparatus.

According to a sixth aspect, a communication apparatus is provided, including a processor and an interface circuit. The interface circuit is configured to communicate with a module outside the communication apparatus. The processor is configured to perform the method according to any one of the foregoing aspects via a logic circuit or by running a computer program or instructions. The communication apparatus may be the second communication apparatus in the first aspect. Alternatively, the communication apparatus may be the first communication apparatus in the second aspect.

Alternatively, the interface circuit may be a code/data read/write interface circuit, and the interface circuit is configured to receive computer-executable instructions (the computer-executable instructions are stored in a memory, and may be read from the memory directly or through another component) and transmit the computer-executable instructions to the processor, so that the processor runs the computer-executable instructions to perform the method according to any one of the foregoing aspects.

In some possible designs, the communication apparatus may be a chip or a chip system.

According to a seventh aspect, this application provides a computer-readable storage medium. The computer-readable storage medium stores instructions. When the instructions are run, the random access method performed by the second communication apparatus in the first aspect or the possible designs of the first aspect is performed; or when the instructions are run, the random access method performed by the first communication apparatus in the second aspect or the possible designs of the second aspect is performed.

According to an eighth aspect, this application provides a computer program product including instructions. When the computer program product runs on a computer, the computer is enabled to perform the random access method performed by the second communication apparatus in the first aspect or the possible designs of the first aspect, or the computer is enabled to perform the random access method performed by the first communication apparatus in the second aspect or the possible designs of the second aspect.

According to a ninth aspect, a communication apparatus (for example, the communication apparatus may be a chip or a chip system) is provided. The communication apparatus includes a processor, configured to implement a function in any one of the foregoing aspects. In a possible design, the communication apparatus further includes a memory, and the memory is configured to store necessary program instructions and data. When the communication apparatus is a chip system, the communication apparatus may include a chip, or may include a chip and another discrete device.

According to a tenth aspect, a communication system is provided. The communication system includes a first communication apparatus and a second communication apparatus. The second communication apparatus is configured to implement the method according to the first aspect, and the second communication apparatus is configured to implement the method according to the second aspect.

For technical effects brought by any design manner in the third aspect to the tenth aspect, refer to technical effects brought by different design manners in the first aspect and the second aspect. Details are not described herein again.

## BRIEF DESCRIPTION OF DRAWINGS

FIG. 1 is a diagram of a structure of a communication system according to an embodiment of this application;

FIG. 2 is a diagram of a satellite communication network architecture according to an embodiment of this application;

FIG. 3 is a diagram of structures of a terminal device and a network device according to an embodiment of this application;

FIG. 4 is a diagram of a structure of another terminal device according to an embodiment of this application;

FIG. 5 is an interaction diagram of a random access method according to an embodiment of this application;

FIG. 6 is a diagram of position relationships between a plurality of reserved resources according to an embodiment of this application;

FIG. 7 is a diagram of another position relationship between a plurality of reserved resources according to an embodiment of this application;

FIG. 8 is a diagram of another position relationship between a plurality of reserved resources according to an embodiment of this application; and

FIG. 9 is a diagram of a structure of a communication apparatus according to an embodiment of this application.

## DESCRIPTION OF EMBODIMENTS

Due to a limited capability of a terminal device, currently, coverage enhancement focuses on uplink communication. In a random access procedure of terrestrial communication, to implement uplink coverage enhancement, repetition of a message 3 (message3, Msg3) is introduced. However, for an acknowledgement (acknowledgement, ACK)/a negative acknowledgement (negative acknowledgement, NACK) corresponding to a message 4 (message4, Msg4)/a message B (message B, MsgB), because a link budget is sufficient for decoding, no corresponding retransmission mechanism is introduced. The ACK/NACK is carried by a physical uplink control channel (physical uplink control channel, PUCCH).

To implement further coverage enhancement, coverage enhancement needs to be performed on a PUCCH that carries the ACK/NACK corresponding to the Msg4/MsgB in a satellite communication scenario. This application provides a method for implementing this type of coverage enhancement. It should be noted that the solutions in this application are also applicable to the terrestrial communication, and can be used to enhance coverage of a terrestrial PUCCH that carries the ACK/NACK corresponding to the Msg4/MsgB.

For ease of understanding of the technical solutions in embodiments of this application, the following first briefly describes technologies related to this application.

1. Random access

A terminal device may complete uplink synchronization through random access, which is an important part in communication.

The random access may be classified into contention-based random access (contention-based random access procedure, CBRA) and contention-free random access (contention-Free Random Access, CFRA) based on whether contention is required. A contention-based random access procedure is a procedure in which a network device does not allocate a dedicated preamble (preamble) and a dedicated physical random access channel (physical random access channel, PRACH) resource to the terminal device, but the terminal device randomly selects a preamble in a specified range and initiates random access. A contention-free random access procedure means that the terminal device initiates, based on an indication of a network device, random access on a specified PRACH resource by using a specified preamble.

In addition, based on different information exchange steps, the random access may be classified into 4-step random access (4-step random access channel, 4-step RACH) and 2-step random access (2-step random access channel, 2-step RACH). In comparison with the 4-step random access, in the 2-step random access, information exchange steps in the 4-step random access are combined, which reduces steps and time required for a random access procedure.

The following describes contention-based 4-step random access (CBRA with 4-step RA) that includes the following steps.

Step 1: The terminal device sends a preamble to the network device on a PRACH resource, which is also referred to as sending a message 1 (message1, Msg1). The preamble and the PRACH resource are determined by the terminal device based on system information (system information) broadcast by the network device.

Step 2: After receiving the Msg1 sent by the terminal device, the network device sends a message 2 (message2, Msg2) to the terminal device based on the random access preamble sent by the terminal device, where the Msg2 is also referred to as a random access response (random access response, RAR) message, and is a response of the network device to the received Msg1. The Msg2 includes configuration information such as a time-frequency resource position and a modulation and coding scheme that are used by the terminal device to send a Msg3.

Step 3: After receiving the Msg2, the terminal device sends the message 3 (message3, Msg3) to the network device on a corresponding time-frequency resource based on the configuration information in the Msg2. The Msg3 is used for contention resolution, and transmission content of the Msg3 is a higher layer message, and content is not fixed. If a plurality of different terminal devices use a same random access preamble to perform random access, whether a conflict exists may be determined based on both the Msg3 and a Msg4.

Step 4: After receiving the Msg3, the network device returns the message 4 (message4, Msg4) to the terminal device. Information content included in the Msg4 is not fixed, and needs to correspond to the information content included in the Msg3, to be jointly used for the contention resolution. For example, it is assumed that the Msg3 sent by the terminal device includes a cell-radio network temporary identifier (cell-radio network temporary identifier, C-RNTI). Correspondingly, if the terminal device detects, in the Msg4, the C-RNTI sent by the terminal device in the Msg3, it is considered that the contention-based random access succeeds, and a subsequent communication process continues to be performed.

The following describes contention-based 2-step random access (CBRA with 2-step RA) that includes the following steps.

Step 1: The terminal device sends a preamble and a physical uplink shared channel (physical uplink shared channel, PUSCH) payload (payload) to the network device, which is also referred to as sending a message A (message A, MsgA).

Step 2: The network device sends a message B (message B, MsgB) to the terminal device, where the MsgB is a contention resolution message in response to the MsgA.

The MsgA undertakes functions of the Msg1 and the Msg3 in the contention-based 4-step random access, and the MsgB undertakes functions of the Msg2 and the Msg4 in the contention-based 4-step random access.

The following describes contention-free 4-step random access (CFRA with 4-step RA) that includes the following steps.

Step 1: The terminal device sends a preamble, namely, a Msg1, to the network device. The preamble is allocated by the network device to the terminal device.

Step 2: The network device sends response information of the Msg1, namely, a Msg2, to the terminal device.

The following describes contention-free 2-step random access (CFRA with 2-step RA) that includes the following steps.

Step 1: The terminal device sends a MsgA to the network device. A preamble and a PUSCH payload are allocated by the network device to the terminal device.

Step 2: The network device sends a MsgB to the terminal device, where the MsgB is a response message of the MsgA.

In the foregoing plurality of random access procedures, after the network device sends the Msg4 or the MsgB to the terminal device, the terminal device needs to send feedback information of the Msg4 or feedback information of the MsgB to the network device, to feed back a decoding result of the Msg4 or a decoding result of the MsgB. For example, the terminal device may send an ACK to the network device, to indicate that decoding succeeds, or may send a NACK to the network device, to indicate that decoding fails.

The feedback information of the Msg4 or the feedback information of the MsgB is carried on the PUCCH. A PUCCH resource used to send the feedback information of the Msg4 is indicated by a physical downlink control channel (physical downlink control channel, PDCCH) for scheduling the Msg4. Specifically, the PDCCH for scheduling the Msg4 indicates an index (index). After receiving the PDCCH for scheduling the Msg4, the terminal device obtains another index through calculation based on the index indicated by the PDCCH and a set of calculation manners defined in a protocol, and uses the obtained another index as an index corresponding to a PUCCH resource in the following Table 1. In this way, the feedback information of the Msg4 is sent through the PUCCH resource corresponding to the index.

Table 1

| Index | PUCCH format (PUCCH format) | First symbol (first symbol) | Number of symbols (number of symbols) | Physical resource block (physical resource block, PRB) offset (PRB offset), denoted as $RB_{\mathrm{BWP}}^{\mathrm{offset}}$ | Set of initial cyclic shift (cyclic shift, CS) indexes (set of initial CS indexes) |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0,6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor N_{\mathrm{BWP}}^{\mathrm{size}}/4 \right\rfloor$ | {0, 3, 6, 9} |

$N_{\mathrm{BWP}}^{\mathrm{size}}$ represents a size of a bandwidth part for random access.

Similarly, in the foregoing solution for determining the PUCCH resource used to send the feedback information of the Msg4, when the Msg4 is replaced with the MsgB, the solution is a solution for determining a PUCCH resource used to send the feedback information of the MsgB.

2. Satellite communication

The satellite communication is an important communication scenario in a 5th generation (5th Generation, 5G) communication system and a future communication system. Compared with terrestrial communication, the satellite communication has wider coverage, a longer communication distance, and a larger path loss. However, a terminal device on the ground has limited transmit power and a limited quantity of antennas. Therefore, a link budget between the terminal device on the ground and a base station deployed on a satellite (which may be referred to as a satellite base station for short) is low. In view of this, further coverage enhancement needs to be performed, so that the terminal device on the ground can be directly connected to the satellite base station.

Due to a limited capability of the terminal device, currently, coverage enhancement focuses on uplink communication. In random access of the terrestrial communication, to implement uplink coverage enhancement, repetition of a Msg3 is introduced. However, for feedback information of a Msg4 or feedback information of a MsgB, because a link budget is sufficient for decoding, no corresponding retransmission mechanism is introduced.

To implement the further coverage enhancement, coverage enhancement needs to be performed on a PUCCH that carries the feedback information of the Msg4 or the feedback information of the MsgB in a satellite communication scenario. However, currently, there is no design solution to enhance the channel. Embodiments of this application provide a random access method, an apparatus, and a system, to resolve a coverage problem of the channel that carries the feedback information of the Msg4 or the feedback information of the MsgB, to enhance the channel.

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A or B may be singular or plural. In addition, in the descriptions of this application, unless otherwise specified, "a plurality of" means two or more than two. "At least one of the following items (pieces)" or a similar expression thereof refers to any combination of these items, including a single item (piece) or any combination of a plurality of items (pieces). For example, at least one of a, b, or c may represent: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference. In addition, in embodiments of this application, words such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the words such as "example" or "for example" is intended to present a related concept in a specific manner for ease of understanding.

The technical solutions in embodiments of this application may be applied to various communication systems. The communication system may be a 3rd generation partnership project (3rd generation partnership project, 3GPP) communication system, for example, a long term evolution (long term evolution, LTE) system, a 5G system, an internet of things (internet of things, IoT) system, a non-terrestrial network (non-terrestrial network, NTN) system, a vehicle-to-everything (vehicle-to-everything, V2X) system, a device-to-device (device-to-device, D2D) communication system, a machine-to-machine (machine-to-machine, M2M) communication system, or another future-oriented similar new system, for example, a 6th generation (6th generation, 6G) system. This is not specifically limited in embodiments of this application. In addition, the terms "system" and "network" may be interchanged.

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of a new service scenario, the technical solutions provided in embodiments of this application are also applicable to similar technical problems.

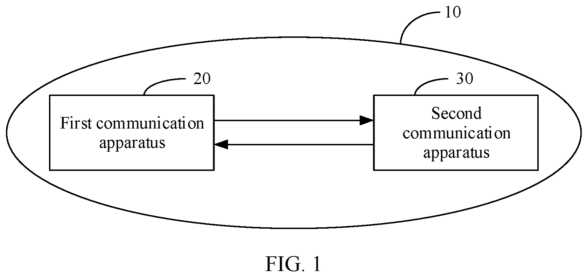

FIG. 1 shows a communication system 10 according to an embodiment of this application. The communication system 10 includes a first communication apparatus 20 and a second communication apparatus 30. The first communication apparatus 20 may communicate with the second communication apparatus 30 in a wireless manner.

It may be understood that FIG. 1 is merely a diagram, and does not constitute a limitation on a quantity of first communication apparatuses 20 or second communication apparatuses 30 in the communication system 10. The communication system 10 may include at least one first communication apparatus 20 and at least one second communication apparatus 30.

Optionally, different first communication apparatuses 20 may communicate with each other. Optionally, different second communication apparatuses 30 may communicate with each other. The first communication apparatus 20 and/or the second communication apparatus 30 may be at fixed locations, or may be mobile.

Optionally, the first communication apparatus 20 and the second communication apparatus 30 in this embodiment of this application may be deployed on land, including an indoor or outdoor device, a handheld device, or a vehicle-mounted device, or may be deployed on water, or may be deployed on an airplane, a balloon, and an artificial satellite in the air. Application scenarios of the first communication apparatus 20 and the second communication apparatus 30 are not limited in embodiments of this application.

Optionally, in this embodiment of this application, the first communication apparatus 20 and the second communication apparatus 30 may communicate with each other on a licensed spectrum, or may communicate with each other on an unlicensed spectrum, or may communicate with each other on both a licensed spectrum and an unlicensed spectrum. The first communication apparatus and the second communication apparatus may communicate with each other on a spectrum below 6 gigahertz (gigahertz, GHz), or may communicate with each other on a spectrum above 6 GHz, or may communicate with each other on both a spectrum below 6 GHz and a spectrum above 6 GHz. A spectrum resource used between the first communication apparatus 20 and the second communication apparatus 30 is not limited in embodiments of this application.

Optionally, the first communication apparatus 20 or the second communication apparatus 30 in this embodiment of this application may be a general-purpose device or a dedicated device. This is not specifically limited in embodiments of this application.

Optionally, the first communication apparatus 20 and the second communication apparatus 30 may be devices of different types. For example, either the first communication apparatus 20 or the second communication apparatus 30 is a network device, and the other is a terminal device.

Optionally, a network device in embodiments of this application is a device that connects a terminal device to a wireless network. The network device in embodiments of this application may include base stations (base stations) in various forms, for example, may be a macro base station, a micro base station (also referred to as a small cell), a relay station, an access point, a transmitting point (transmitting point, TP), an evolved NodeB (evolved NodeB, eNodeB), a transmission reception point (transmission reception point, TRP), a next generation NodeB (next generation NodeB, gNB) in a 5G mobile communication system, a device that implements a base station function in a communication system evolved after 5G, a mobile switching center, or a device that performs a base station function in device-to-device (Device-to-Device, D2D), vehicle-to-everything (vehicle-to-everything, V2X), or machine-to-machine (machine-to-machine, M2M) communication, may be a network device in an NTN communication system, in other words, may be deployed on a high-altitude platform or a satellite, or may be a module or a unit that completes some functions of a base station, for example, may be a central unit (central unit, CU) or a distributed unit (distributed unit, DU) in a cloud access network (cloud radio access network, C-RAN) system. A specific technology and a specific device form that are used for the network device are not limited in embodiments of this application. All or some functions of the network device may alternatively be implemented by using a software function running on hardware, or may be implemented by using a virtualization function instantiated on a platform (for example, a cloud platform). In this application, unless otherwise specified, the network device is a radio access network (radio access network, RAN) device.

Optionally, a terminal device in embodiments of this application may be a device having a wireless transceiver function, or may be referred to as a terminal (terminal). The terminal device may be specifically user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a mobile terminal, a user terminal, a wireless communication device, a user agent, a user apparatus, or the like. The terminal device may alternatively be a satellite phone, a cellular phone, a smartphone, a cordless phone, a session initiation protocol (session initiation protocol, SIP) phone, a wireless data card, a wireless modem, a tablet computer, a computer having a wireless transceiver function, a wireless local loop (wireless local loop, WLL) station, a personal digital assistant (personal digital assistant, PDA), a handheld device having a wireless communication function, a computing device or another processing device connected to a wireless modem, a vehicle-mounted device, a communication device carried on a high-altitude aircraft, a wearable device, a drone, a robot, a smart point of sale (point of sale, POS) machine, a device in machine type communication, a terminal device in D2D, a vehicle-mounted terminal device in V2X, an on-board unit (on-board unit, OBU), a vehicle-mounted communication terminal (telematics box, T-box), a vehicle or road side unit (road side unit, RSU), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. A specific technology and a specific device form that are used for the terminal device are not limited in embodiments of this application. For example, the terminal device may alternatively be a chip or a module. All or some functions of the terminal device may alternatively be implemented by using a software function running on hardware, or may be implemented by using a virtualization function instantiated on a platform (for example, a cloud platform).

Interaction between the first communication apparatus 20 and the second communication apparatus 30 shown in FIG. 1 is used as an example. In the random access method provided in embodiments of this application, the first communication apparatus 20 determines first control information, where the first control information indicates a first reserved resource and a number of repetitions of first feedback information. The number of repetitions of the first feedback information is greater than or equal to 1, the first feedback information indicates a decoding result of a MsgB or a decoding result of a Msg4, the first reserved resource is one of one or more reserved resources, a number of the one or more reserved resources is the same as the number of repetitions of the first feedback information, and each of the one or more reserved resources is used for sending the first feedback information once. The first communication apparatus 20 sends the first control information to the second communication apparatus 30. After receiving the first control information, the second communication apparatus 30 determines the one or more reserved resources based on the first control information. Specific implementation and technical effects of the solution are described in detail in subsequent method embodiments, and details are not described herein.

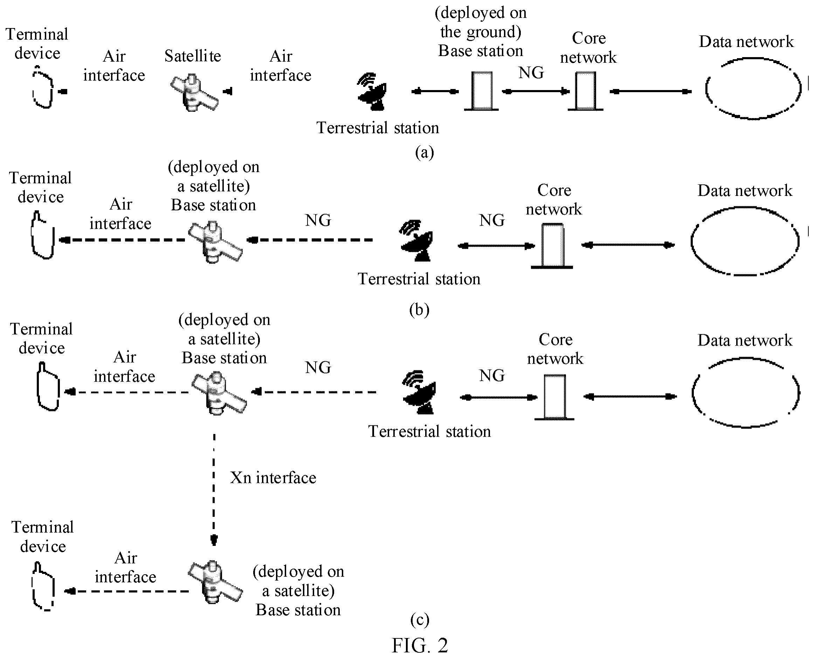

Optionally, the communication system 10 shown in FIG. 1 may be applied to a satellite communication network architecture. FIG. 2 is a diagram of an example of a satellite communication network architecture applicable to the communication system 10.

In the network architecture shown in FIG. 2, a terminal device on the ground accesses a network through an air interface (the air interface may be various types of air interfaces, for example, a 5G new radio). As shown in (a) and (b) in FIG. 2, a base station may be deployed on a satellite, or may be deployed on the ground. The satellite may be connected to a terrestrial station over a radio link. The base station deployed on the ground may be connected to the terrestrial station, to communicate with the satellite. The terrestrial station or the base station deployed on the ground may be connected to a core network in a wired or wireless manner. There may be a radio link between satellites. If the satellite has only a transparent transmission and forwarding function (that is, a corresponding base station is deployed on the ground), only transparent transmission and forwarding can be implemented between the satellites. If the base station or some base station functions are deployed on the satellite, signaling exchange and user data transmission between base stations can be completed between the satellites, as shown in (c) in FIG. 2. Network elements in FIG. 2 and interfaces between the network elements are described as follows:

Terminal device: The terminal device includes a mobile device that supports new radio. A typical mobile device, for example, a mobile phone or a pad may access a satellite network through an air interface and initiate services such as call and internet access.

Base station: The base station mainly provides a radio access service, schedules a radio resource to an access terminal device, and provides a reliable radio transmission protocol, a data encryption protocol, and the like.

Core network: The core network is responsible for services such as user access control, mobility management, session management, user authentication, and charging. The core network includes a plurality of functional units that may be divided into a control plane functional entity and a data plane functional entity.

Terrestrial station: The terrestrial station is responsible for forwarding signaling and service data between a core network and a base station that is deployed on a satellite.

Air interface: The air interface: is a radio link between a terminal device and a base station.

Xn interface: The Xn interface is an interface between base stations, and is mainly for exchange of signaling like handover signaling.

NG interface: The NG interface is an interface between a base station and a core network, and is mainly for exchange of signaling such as a non-access stratum (non-access stratum, NAS) of a core network and service data of a user.

It should be noted that the Xn interface and the NG interface in FIG. 2 are interfaces in a 5G communication system. If the network architecture shown in FIG. 2 is applied to a 4th generation (4th Generation, 4G) communication system, the Xn interface is referred to as an X2 interface, and the NG interface is an S1 interface.

The terminal device in FIG. 2 may be the second communication apparatus 30 in the communication system 10, and the base station in FIG. 2 may be the first communication apparatus 20 in the communication system 10.

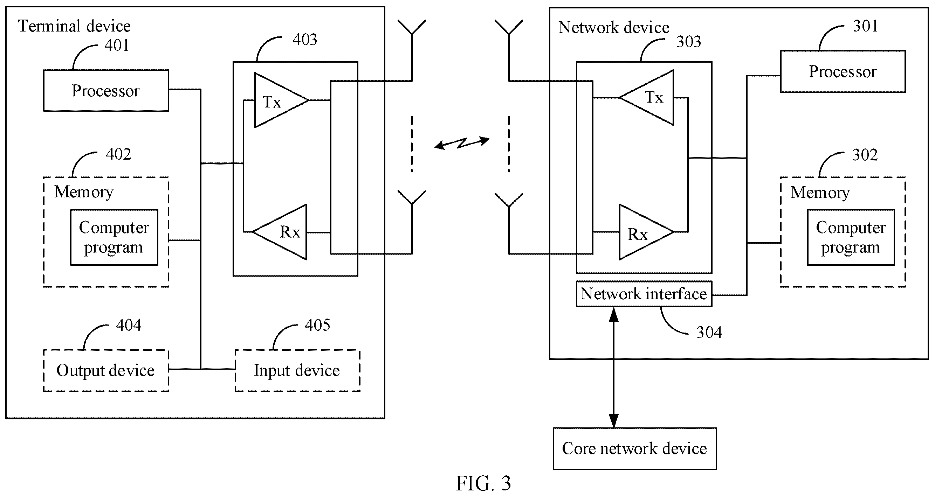

Optionally, if the first communication apparatus 20 in FIG. 1 is a network device, the first communication apparatus 20 may use a structure of a network device shown in FIG. 3. If the second communication apparatus 30 in FIG. 1 is a terminal device, the second communication apparatus 30 may use a structure of a terminal device shown in FIG. 3.

The terminal device includes at least one processor 401 and at least one transceiver 403 (which may also be referred to as a communication interface 403). Optionally, the terminal device may further include at least one memory 402, at least one output device 404, or at least one input device 405.

The processor 401, the memory 402, and the transceiver 403 are connected to each other through a communication line. The communication line may include a path for transmitting information between the foregoing components.

The processor 401 may be a general-purpose central processing unit (central processing unit, CPU), another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor. During specific implementation, in an embodiment, the processor 401 may also include a plurality of CPUs, and the processor 401 may be a single-core processor or a multi-core processor. The processor herein may be one or more devices, circuits, or processing cores configured to process data.

The memory 402 may be an apparatus having a storage function, for example, the memory may be a read-only memory (read-only memory, ROM) or another type of static storage device that can store static information and instructions, a random access memory (random access memory, RAM) or another type of dynamic storage device that can store information and instructions, or may be a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM) or another compact disk storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 402 may exist independently, and is connected to the processor 401 through the communication line. Alternatively, the memory 402 may be integrated with the processor 401.

The memory 402 is configured to store computer-executable instructions for performing the solution of this application, and the processor 401 controls execution. Specifically, the processor 401 is configured to execute the computer-executable instructions stored in the memory 402, to implement the random access method in embodiments of this application.

Alternatively, optionally, in embodiments of this application, the processor 401 may perform a processing-related function in the random access method provided in the following embodiment of this application, and the transceiver 403 is responsible for communicating with another device or a communication network. This is not specifically limited in embodiments of this application.

Optionally, the computer-executable instructions in embodiments of this application may also be referred to as application program code or computer program code. This is not specifically limited in embodiments of this application.

The transceiver 403 may be any apparatus such as a transceiver, and is configured to communicate with another device or a communication network, for example, the Ethernet, a radio access network, or a wireless local area network (wireless local area network, WLAN). The transceiver 403 includes a transmitter (transmitter, Tx) and a receiver (receiver, Rx).

The output device 404 communicates with the processor 401, and may display information in a plurality of manners. For example, the output device 404 may be a liquid crystal display (liquid crystal display, LCD), a light emitting diode (light emitting diode, LED) display device, a cathode ray tube (cathode ray tube, CRT) display device, or a projector (projector).

The input device 405 communicates with the processor 401, and may receive user input in a plurality of manners. For example, the input device 405 may be a mouse, a keyboard, a touchscreen device, or a sensor device.

The network device includes at least one processor 301, at least one transceiver 303 (which may also be referred to as a communication interface 303), and at least one network interface 304. Optionally, the network device may further include at least one memory 302. The processor 301, the memory 302, the transceiver 303, and the network interface 304 are connected to each other through a communication line. The network interface 304 is configured to connect to a core network device through a link (for example, an S1 interface), or connect to a network interface of another network device through a wired or wireless link (for example, an X2 interface) (not shown in FIG. 3). This is not specifically limited in embodiments of this application. In addition, for related descriptions of the processor 301, the memory 302, and the transceiver 303, refer to the descriptions of the processor 401, the memory 402, and the transceiver 403 of the terminal device. Details are not described herein again.

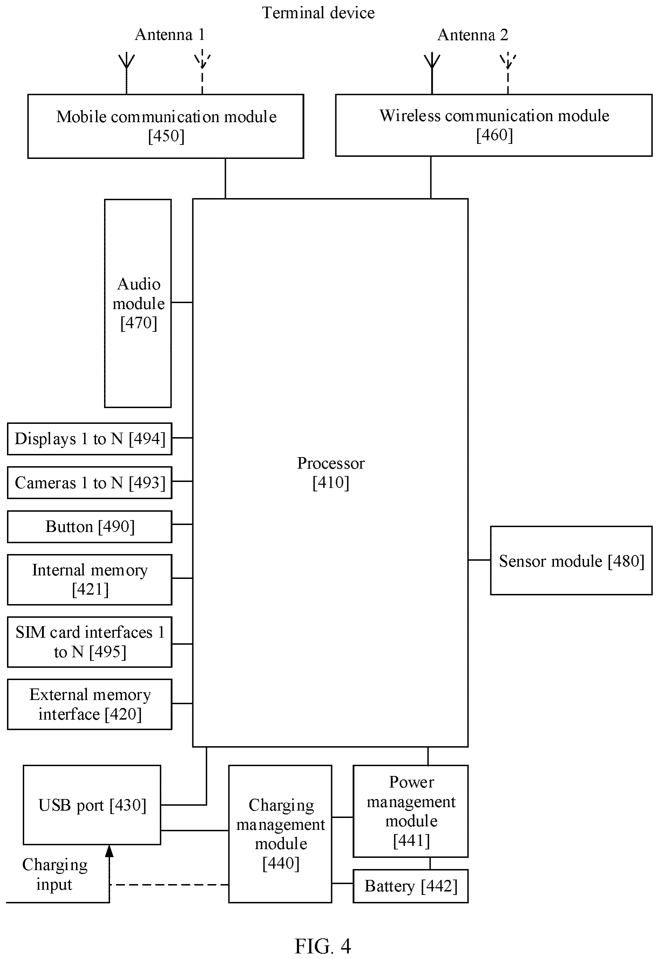

With reference to a diagram of the structure of the terminal device shown in FIG. 3, for example, FIG. 4 shows a specific form of a structure of the terminal device according to an embodiment of this application.

In some embodiments, a function of the processor 401 in FIG. 3 may be implemented by using a processor 410 in FIG. 4.

In some embodiments, a function of the transceiver 403 in FIG. 3 may be implemented by using an antenna 1, an antenna 2, a mobile communication module 450, a wireless communication module 460, and the like in FIG. 4. The mobile communication module 450 may provide a solution that is applied to the terminal device and that includes a wireless communication technology, for example, LTE, NR, or future mobile communication. The wireless communication module 460 may provide a solution that is applied to the terminal device and that includes wireless communication technologies such as WLAN (for example, a Wi-Fi network), Bluetooth (Bluetooth, BT), a global navigation satellite system (global navigation satellite system, GNSS), frequency modulation (frequency modulation, FM), near field communication (near field communication, NFC) and infrared. In some embodiments, in the terminal device, the antenna 1 is coupled to the mobile communication module 450, and the antenna 2 is coupled to the wireless communication module 460, so that the terminal device can communicate with a network and another device by using a wireless communication technology.

In some embodiments, a function of the memory 402 in FIG. 3 may be implemented by using an internal memory 421 in FIG. 4, an external memory connected to an external memory interface 420, or the like.

In some embodiments, a function of the output device 404 in FIG. 3 may be implemented by using a display 494 in FIG. 4.

In some embodiments, a function of the input device 405 in FIG. 3 may be implemented by using a mouse, a keyboard, a touchscreen device, or a sensor module 480 in FIG. 4.

In some embodiments, as shown in FIG. 4, the terminal device may further include one or more of an audio module 470, a camera 493, a button 490, a subscriber identity module (subscriber identity module, SIM) card interface 495, a universal serial bus (universal serial bus, USB) port 430, a charging management module 440, a power management module 441, and a battery 442.

It may be understood that the structure shown in FIG. 4 does not constitute a specific limitation on the terminal device. For example, in some other embodiments of this application, the terminal device may include more or fewer components than those shown in the figure, or combine some of the components, or split some of the components, or have different layouts of the components. The components shown in the figure may be implemented by using hardware, software, or a combination of software and hardware.

With reference to FIG. 1 to FIG. 4, the following describes in detail the random access method provided in embodiments of this application by using an example in which the first communication apparatus 20 shown in FIG. 1 interacts with any second communication apparatus 30.

It should be noted that names of messages between network elements, names of parameters in the messages, or the like in the following embodiments of this application are merely examples, and there may be other names in a specific implementation. This is not specifically limited in embodiments of this application.

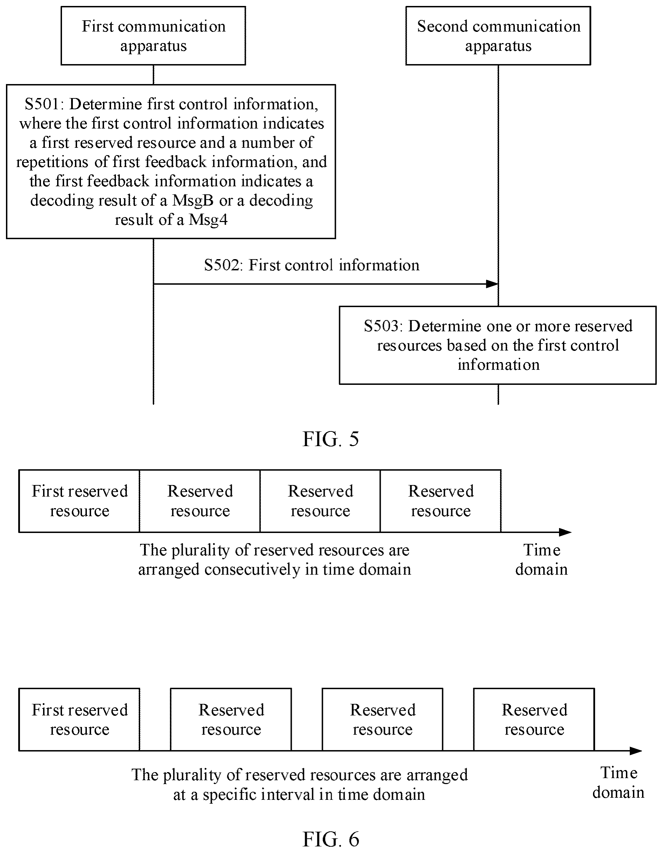

FIG. 5 shows a random access method according to an embodiment of this application. In FIG. 5, an example in which a first communication apparatus and a second communication apparatus are used as execution bodies of an interaction example is used to illustrate the method. However, the execution bodies of the interaction example are not limited in this application. For example, the first communication apparatus in FIG. 5 may alternatively be a chip, a chip system, or a processor that supports the communication apparatus in implementing the method, or may be a logical module or software that can implement all or some functions of the first communication apparatus. The second communication apparatus in FIG. 5 may alternatively be a chip, a chip system, or a processor that supports the communication apparatus in implementing the method, or may be a logical module or software that can implement all or some functions of the second communication apparatus. The random access method includes steps S501 to S503.

S501: The first communication apparatus determines first control information, where the first control information indicates a first reserved resource and a number of repetitions of first feedback information. The number of repetitions of the first feedback information is greater than or equal to 1, the first feedback information indicates a decoding result of a MsgB or a decoding result of a Msg4, the first reserved resource is one of one or more reserved resources, a number of the one or more reserved resources is the same as the number of repetitions of the first feedback information, and each of the one or more reserved resources is used for transmitting the first feedback information once.

S502: The first communication apparatus sends the first control information to the second communication apparatus, and correspondingly, the second communication apparatus receives the first control information.

S503: The second communication apparatus determines the one or more reserved resources based on the first control information.

According to the random access method provided in this embodiment of this application, the second communication apparatus can determine, based on the first control information, the number of repetitions of the first feedback information and the reserved resource used to send the first feedback information, so that repetition of the first feedback information can be implemented, and coverage enhancement can be performed on a channel that carries the first feedback information, that is, a channel that carries feedback information of a downlink signal in a random access procedure.

In S501, that the first communication apparatus determines the first control information may also be referred to as that the first communication apparatus obtains the first control information or the first communication apparatus generates the first control information. The first control information indicates the first reserved resource and the number of repetitions of the first feedback information. The following describes the first feedback information and the first reserved resource in detail.

In this embodiment of this application, the first feedback information is the feedback information of the downlink signal in the random access procedure, and may indicate a decoding result of the downlink signal in the random access procedure. For example, in a 2-step random access scenario, the first feedback information may indicate a decoding result of a MsgB. In a 4-step random access scenario, the first feedback information may indicate a decoding result of a Msg4.

Further, if another downlink signal is introduced in the random access procedure, the first feedback information may alternatively be feedback information of the another downlink signal, and indicate a decoding result of the another downlink signal. For example, it is assumed that the introduced downlink signal is referred to as a Msg5, a Msg6, a Msg7, a Msg8, or the like. The first feedback information may also indicate a feedback result of the downlink signal, for example, the Msg5, the Msg6, the Msg7, or the Msg8.

For ease of description, the following describes the random access method provided in this embodiment of this application in detail by using an example in which the random access method provided in this embodiment of this application is applied to the 2-step random access scenario or the 4-step random access scenario. It may be understood that, if another random access form newly appears, the random access method provided in this embodiment of this application may also be applied to the newly-appearing random access scenario. A Msg1/Msg3/MsgA in the following descriptions may be correspondingly replaced with other uplink information in the another random access scenario, and a MsgB/Msg4 in the following descriptions may be correspondingly replaced with other downlink information in the another random access scenario.

Optionally, the first feedback information may indicate that decoding of the MsgB or decoding of the Msg4 succeeds, or may indicate that decoding of the MsgB or decoding of the Msg4 fails. For example, the first feedback information may be an ACK indicating that decoding succeeds, or a NACK indicating that decoding fails.

In this embodiment of this application, the first feedback information may be sent by the second communication apparatus to the first communication apparatus. Before the second communication apparatus sends the first feedback information to the first communication apparatus, the first communication apparatus may indicate, by using the first control information sent to the first communication apparatus, the number of repetitions of the first feedback information. The number, indicated by the first communication apparatus by using the first control information, of repetitions of the first feedback information may be understood as a number of pieces of first feedback information that the first communication apparatus expects to receive from the second communication apparatus.

The number, indicated by the first control information, of repetitions of the first feedback information may be greater than or equal to 1.

The following describes several specific implementations, provided in this embodiment of this application, in which the first communication apparatus determines the number, indicated by the first control information, of repetitions of the first feedback information.

Implementation 1: The first communication apparatus may determine, based on a signal received from the second communication apparatus, the number, indicated by the first control information, of repetitions of the first feedback information.

In this implementation, the first communication apparatus may determine, based on a parameter, for example, quality/strength of the signal from the second communication apparatus, the number, indicated by the first control information, of repetitions of the first feedback information. If a larger value of the parameter of the signal indicates better quality of a channel used by the second communication apparatus to send the signal to the first communication apparatus, the first communication apparatus may determine a smaller number of repetitions of the first feedback information when the value of the parameter of the signal is larger. If a larger value of the parameter of the signal indicates poorer quality of a channel used by the second communication apparatus to send the signal to the first communication apparatus, the first communication apparatus may determine a larger number of repetitions of the first feedback information when the value of the parameter of the signal is larger.

Optionally, the first communication apparatus may establish a mapping relationship between the number of repetitions of the first feedback information and a value of the parameter of the signal (or an interval within which the value of the parameter of the signal falls), to determine, based on the value of the parameter of the signal from the second communication apparatus, the number, indicated by the first control information, of repetitions of the first feedback information.

For example, it is assumed that the parameter of the signal is the quality of the signal. In the 2-step random access scenario, the first communication apparatus may determine, based on signal quality of the MsgA from the second communication apparatus, the number, indicated by the first control information, of repetitions of the first feedback information. In the 4-step random access scenario, the first communication apparatus may determine, based on signal quality of the Msg1 and/or the Msg3 from the second communication apparatus, the number, indicated by the first control information, of repetitions of the first feedback information. Specifically, if the quality of the signal sent by the second communication apparatus to the first communication apparatus is good, the first communication apparatus may determine a small number of repetitions of the first feedback information. If the quality of the signal sent by the second communication apparatus to the first communication apparatus is poor, the first communication apparatus may determine a large number of repetitions of the first feedback information.

Implementation 2: The first communication apparatus may determine, based on a capability of repetition of the first feedback information by the second communication apparatus, the number, indicated by the first control information, of repetitions of the first feedback information.

According to this solution, the second communication apparatus can indicate the capability of repetition of the first feedback information by the second communication apparatus, so that the first communication apparatus can indicate an appropriate number of repetitions of the first feedback information based on the capability of the second communication apparatus.

Optionally, before the first communication apparatus sends the first control information to the second communication apparatus, the second communication apparatus may send first indication information to the first communication apparatus, where the first indication information indicates the capability of repetition of the first feedback information by the second communication apparatus. The first communication apparatus determines, based on the received first indication information, the capability of repetition of the first feedback information by the second communication apparatus, and determines, based on the capability of repetition of the first feedback information by the second communication apparatus, the number, indicated by the first control information, of repetitions of the first feedback information.

In a possible implementation, the first indication information may indicate that the second communication apparatus has or does not have a capability of repetition of the first feedback information for a plurality of times. If the first communication apparatus determines, based on the first indication information, that the second communication apparatus has the capability of repetition of the first feedback information for a plurality of times, the first communication apparatus determines that the number, indicated by the first control information, of repetitions of the first feedback information may be greater than or equal to 2. If the first communication apparatus determines, based on the first indication information, that the second communication apparatus does not have the capability of repetition of the first feedback information for a plurality of times, the first communication apparatus determines that the number, indicated by the first control information, of repetitions of the first feedback information may be equal to 1.

For example, the first indication information may be a 1-bit (bit) field. When a value of the bit is 1, it indicates that the second communication apparatus has the capability of repetition of the first feedback information for a plurality of times.

When a value of the bit is 2, it indicates that the second communication apparatus does not have the capability of repetition of the first feedback information for a plurality of times.

In another possible implementation, the first indication information may indicate one or more numbers, supported by the second communication apparatus, of repetitions of the first feedback information. Alternatively, the first indication information may indicate a maximum value of numbers, supported by the second communication apparatus, of repetitions of the first feedback information (in other words, indicate a maximum number, supported by the second communication apparatus, of repetitions of the first feedback information). Correspondingly, the first communication apparatus may select, based on the first indication information, one from the one or more numbers, supported by the second communication apparatus, of repetitions of the first feedback information as the number, indicated by the first control information, of repetitions of the first feedback information. Alternatively, the first communication apparatus may determine, based on the first indication information, a value that does not exceed the maximum value of numbers, supported by the second communication apparatus, of repetitions of the first feedback information as the number, indicated by the first control information, of repetitions of the first feedback information.

For example, it is assumed that the first indication information indicates that the second communication apparatus supports two, four, and eight repetitions of the first feedback information. The first communication apparatus may determine, based on the first indication information, 4 as the number, indicated by the first control information, of repetitions of the first feedback information. For another example, it is assumed that the first indication information indicates that the second communication apparatus supports a maximum of eight repetitions of the first feedback information. The first communication apparatus may determine, based on the first indication information, that the number, indicated by the first control information, of repetitions of the first feedback information cannot exceed 8.

Implementation 3: The first communication apparatus may determine, based on a request of the second communication apparatus for repetition of the first feedback information, the number, indicated by the first control information, of repetitions of the first feedback information.

According to this solution, the second communication apparatus can request to perform repetition on the first feedback information to the first communication apparatus, so that the first communication apparatus determines that the second communication apparatus can perform repetition on the first feedback information.

In this implementation, before the first communication apparatus sends the first control information to the second communication apparatus, the second communication apparatus may send second indication information to the first communication apparatus, where the second indication information indicates that the second communication apparatus requests to perform repetition on the first feedback information. Optionally, the second indication information may indicate that the second communication apparatus requests to perform repetition on the first feedback information for a plurality of times. The first communication apparatus may determine, based on the second indication information, that the second communication apparatus requests to perform repetition on the first feedback information for a plurality of times, to determine that the number, indicated by the first control information, of repetitions of the first feedback information may be greater than or equal to 2.

For example, the second indication information may be a specific field carried in a message sent by the second communication apparatus to the first communication apparatus. After receiving the message, if the first communication apparatus determines that the special field exists in the message, the first communication apparatus determines that the second communication apparatus requests to perform repetition on the first feedback information for a plurality of times.

Alternatively, the second indication information may indicate a number, requested by the second communication apparatus, of repetitions of the first feedback information (or referred to as a number, requested by using the second indication information, of repetitions of the first feedback information). The number, requested by using the second indication information, of repetitions of the first feedback information may be understood as a number, expected by the second communication apparatus, of repetitions of the first feedback information. The first communication apparatus may determine, based on the number, requested by using the second indication information, of repetitions of the first feedback information, the number, indicated by the first control information, of repetitions of the first feedback information.

For example, it is assumed that the second indication information indicates that the second communication apparatus requests to perform repetition on the first feedback information twice. The first communication apparatus may determine, based on the second indication information, 2 as the number, indicated by the first control information, of repetitions of the first feedback information.

Optionally, in the 2-step random access scenario, the first indication information or the second indication information may be carried in the MsgA sent by the second communication apparatus to the first communication apparatus. In the 4-step random access scenario, the first indication information or the second indication information may be carried in the Msg3 sent by the second communication apparatus to the first communication apparatus.

Currently, a manner in which a terminal device requests to perform repetition on the Msg3 is indicated through selection of a preamble resource or a preamble to be sent. A network side may learn, based on the received preamble or the received preamble resource, whether the terminal device requests to perform repetition on the Msg3. However, in this manner, different resources or preambles are required to distinguish between terminal devices that request or do not request to perform repetition on the Msg3. In case of a same total resource or a same available preamble, a random access capacity is reduced. In view of this disadvantage, in this embodiment of this application, the second communication apparatus may notify, by using the MsgA/Msg3, the first communication apparatus that the second communication apparatus can perform repetition on the first feedback information, and does not occupy a preamble resource or a preamble, and does not cause a reduced random access capacity.

Optionally, the implementation 1 may be combined with the implementation 2 or the implementation 3. For example, it is assumed that in the 4-step random access scenario, the Msg3 sent by the second communication apparatus to the first communication apparatus includes the first indication information. The first indication information indicates that the second communication apparatus supports two, four, and eight repetitions of the first feedback information. After receiving the Msg3, the first communication apparatus determines that signal quality of the Msg3 is poor. In this case, the first communication apparatus may select a largest value 8 in 2, 4, and 8 as the number, indicated by the first control information, of repetitions of the first feedback information. For another example, it is assumed that in the 4-step random access scenario, the Msg3 sent by the second communication apparatus to the first communication apparatus includes the second indication information. The second indication information indicates that the second communication apparatus requests to perform repetition on the first feedback information for four times. After receiving the Msg3, the first communication apparatus determines that signal quality of the Msg3 is poor. It is inferred that if the first feedback information is received for four times, the first feedback information cannot be successfully decoded. In this case, the first communication apparatus may determine a number that exceeds 4, for example, 6, 8, or 10 as the number, indicated by the first control information, of repetitions of the first feedback information. For another example, it is assumed that in the 2-step random access scenario, the MsgA sent by the second communication apparatus to the first communication apparatus includes the second indication information. The second indication information indicates that the second communication apparatus requests to perform repetition on the first feedback information for a plurality of times. After receiving the MsgA, the first communication apparatus determines that signal quality of the MsgA is good. It is inferred that receiving the first feedback information once can decode the first feedback information. In this case, the first communication apparatus may determine 1 as the number, indicated by the first control information, of repetitions of the first feedback information.

Optionally, the number, indicated by the first indication information or the second indication information, of repetitions of the first feedback information may be determined by the second communication apparatus based on sixth indication information sent by the first communication apparatus. The sixth indication information indicates one or more candidate numbers of repetitions. After receiving the sixth indication information, the second communication apparatus may select one or more candidate numbers of repetitions from the one or more candidate numbers of repetitions as the number, indicated by the first indication information or the second indication information, of repetitions of the first feedback information.

Optionally, the sixth indication information may be carried in system information (system information), for example, a system information block 1 (system information block 1, SIB1), broadcast by the first communication apparatus.

In a possible implementation, after receiving the sixth indication information, the second communication apparatus may indicate, by using the first indication information or the second indication information, indexes respectively corresponding to the one or more selected candidate numbers of repetitions. It should be noted that this implementation does not constitute a limitation on the first indication information or the second indication information. When the second communication apparatus receives the sixth indication information, the first indication information or the second indication information may also directly indicate a value of the number of repetitions of the first feedback information.

For example, it is assumed that the sixth indication information indicates that three candidate numbers of repetitions are 2, 4, and 8, where 2 corresponds to an index 0, 4 corresponds to an index 1, and 8 corresponds to an index 2. After receiving the sixth indication information, the second communication apparatus selects 4 from 2, 4, and 8 as the number, requested by using the second indication information, of repetitions of the first feedback information, to send the second indication information indicating the index 1 to the first communication apparatus.

Optionally, if the second communication apparatus does not receive the sixth indication information, the first indication information or the second indication information may directly indicate a value of the number of repetitions of the first feedback information. For example, the first indication information may directly indicate that the second communication apparatus supports two, four, and eight repetitions of the first feedback information.

Optionally, if the second communication apparatus does not receive the sixth indication information, the second communication apparatus may select one or more default candidate numbers of repetitions from one or more default candidate numbers of repetitions, and indicate, by using the first indication information or the second indication information, an index corresponding to each of the selected one or more default candidate numbers of repetitions.

The default candidate numbers of repetitions may be pre-agreed on by the first communication apparatus and the second communication apparatus, or may be specified in a protocol.

For example, it is assumed that the default candidate numbers of repetitions include 2, 4, and 8, where 2 corresponds to an index 0, 4 corresponds to an index 1, and 8 corresponds to an index 2. The second communication apparatus selects, based on the capability of repetition of the first feedback information by the second communication apparatus, 2 and 4 from 2, 4, and 8 as the supported number, indicated by the first indication information, of repetitions of the first feedback information, to send, to the first communication apparatus, the first indication information indicating the index 0 and the index 1.

In a possible implementation in which the first indication information or the second indication information indicates the index corresponding to each of the one or more selected candidate numbers of repetitions (or default candidate numbers of repetitions), the first indication information or the second indication information may be the index corresponding to each of the one or more selected candidate numbers of repetitions (or default candidate numbers of repetitions).

According to this solution, the second communication apparatus can directly send the index to indicate the number of repetitions of the first feedback information, thereby reducing signaling overheads.

The foregoing describes the first feedback information and the number, indicated by the first control information, of repetitions of the first feedback information. The following describes the first reserved resource in detail.

In this embodiment of this application, to enable the second communication apparatus to successfully perform repetition on the first feedback information, the first communication apparatus needs to reserve one or more resources for the second communication apparatus. The number of the one or more reserved resources (namely, the one or more resources reserved for repetition of the first feedback information) is the same as the number, indicated by the first control information, of repetitions of the first feedback information. Each of the one or more reserved resources is used for transmitting the first feedback information once. For the second communication apparatus, one reserved resource is used for sending the first feedback information once. For the first communication apparatus, one reserved resource is used for receiving the first feedback information once.

The first reserved resource is one of the one or more reserved resources. The first communication apparatus may indicate the first reserved resource by using the first control information.

It may be understood that, when there is one reserved resource, the first reserved resource is the only resource that is reserved by the first communication apparatus for the first communication apparatus and that is used to send the first feedback information.

In this embodiment of this application, sizes of all the one or more reserved resources are the same. It should be noted that the sizes of all the reserved resources are the same, but it is not required that all the reserved resources have a same time domain resource and a same frequency domain resource. For example, it is assumed that the first reserved resource occupies two symbols in time domain and two subcarriers in frequency domain. Another reserved resource may occupy two symbols in time domain and two subcarriers in frequency domain, or may occupy four symbols in time domain and one subcarrier in frequency domain, or may occupy one symbol in time domain and four subcarriers in frequency domain.

Optionally, the reserved resource may be a resource used to send an uplink signal in a random access procedure. For example, the reserved resource may be a PUCCH resource.

In S502, the first communication apparatus sends the first control information to the second communication apparatus. Correspondingly, the second communication apparatus receives the first control information.

Optionally, in the 2-step random access scenario, the first control information may be control information for scheduling the MsgB, for example, a PDCCH for scheduling the MsgB. In the 4-step random access scenario, the first control information may be control information for scheduling the Msg4, for example, a PDCCH for scheduling the Msg4.

In S503, the second communication apparatus may determine the number of repetitions of the first feedback information and the first reserved resource that are indicated by the first control information. Further, the second communication apparatus may determine the one or more reserved resources based on the first reserved resource, and determine, based on the number, indicated by the first control information, of repetitions of the first feedback information, an actual number of times of sending the first feedback information by the second communication apparatus.

The following describes different manners in which the first control information indicates the first reserved resource and the number of repetitions of the first feedback information.

In a possible implementation, the first control information includes fourth indication information and fifth indication information. The fourth indication information indicates the number of repetitions of the first feedback information, and the fifth indication information indicates the first reserved resource.

The fourth indication information may indicate, in an explicit or implicit indication manner, the number of repetitions of the first feedback information. Optionally, the fourth indication information may reuse an existing field (or referred to as a field) to indicate the number of repetitions of the first feedback information. Alternatively, the fourth indication information may be a newly added field. Alternatively, the fourth indication information may perform indicating jointly by a plurality of fields.

For example, the fourth indication information may reuse one or two bits in an existing field 1 to indicate the number of repetitions of the first feedback information. For example, the fourth indication information may reuse a bit in a downlink assignment index (downlink assignment index, DAI) field.

For another example, the fourth indication information may jointly indicate the number of repetitions of the first feedback information by using one bit in the field 1 and one bit in a field 2. For example, in the 4-step random access scenario, the field 1 may be a field indicating a modulation and coding scheme (modulation and coding scheme, MSC) for Msg4 transmission, and the field 2 may be a field indicating a hybrid automatic repeat request (hybrid automatic repeat request, HARQ) process number for Msg4 transmission. In the 2-step random access scenario, the field 1 may be a field indicating an MSC for MsgB transmission, and the field 2 may be a field indicating a HARQ process number for MsgB transmission.

Optionally, the fourth indication information may be an index corresponding to the number of repetitions of the first feedback information in the one or more candidate numbers of repetitions indicated by the sixth indication information. After receiving the fourth indication information, the second communication apparatus may determine, with reference to the sixth indication information, the number, indicated by the fourth indication information, of repetitions of the first feedback information.

For example, it is assumed that the sixth indication information indicates that three candidate numbers of repetitions are 2, 4, and 8, where 2 corresponds to an index 0, 4 corresponds to an index 1, and 8 corresponds to an index 2. If the fourth indication information may directly indicate the index 0, the second communication apparatus may determine, based on the index 0, that the number, indicated by the fourth indication information, of repetitions of the first feedback information is 2.

According to this solution, the first communication apparatus can directly send the index to indicate the number of repetitions of the first feedback information, thereby reducing signaling overheads.

Optionally, the fourth indication information may directly indicate a value of the number of repetitions of the first feedback information. For example, the fourth indication information may directly indicate that the number of repetitions of the first feedback information is 2.

Optionally, in this implementation, the fifth indication information may be used to determine a second index. The second index is an index corresponding to the first reserved resource. The second communication apparatus may determine the corresponding first reserved resource based on the second index.

Specifically, the second communication apparatus and the first communication apparatus may preconfigure a same resource configuration table. In the resource configuration table, different indexes correspond to different resources. The first communication apparatus determines that the index corresponding to the first reserved resource in the resource configuration table is the second index, to send, to the second communication apparatus, the fifth indication information used to determine the second index. After receiving the fifth indication information, the second communication apparatus determines the second index, and determines a resource corresponding to the second index in the resource configuration table as the first reserved resource.

Optionally, the fifth indication information may be the second index. Alternatively, the fifth indication information may be a third index. In this case, the second communication apparatus and the first communication apparatus may pre-agree on a set of calculation manners, and the set of calculation manners is used to calculate the index in the resource configuration table. After receiving the third index, the second communication apparatus substitutes the third index into the set of calculation manners for calculation, to obtain the second index, so as to determine the resource corresponding to the second index in the resource configuration table as the first reserved resource.

In another possible implementation, the first control information includes third indication information, the third indication information is used to determine a first index and a second index, the first index is an index corresponding to a first resource, the second index is an index corresponding to the first reserved resource, and the number of repetitions of the first feedback information is the same as a number of symbols of the first reserved resource. In other words, the third indication information may be used to determine the first reserved resource and the number of repetitions of the first feedback information.

According to this solution, the first reserved resource and the number of repetitions of the first feedback information can be indicated by using one piece of information, thereby reducing signaling overheads. In addition, because the first communication apparatus does not need to additionally indicate the first feedback information, impact on an existing field in the downlink information in the random access procedure can be reduced.

Specifically, the second communication apparatus and the first communication apparatus may preconfigure a same resource configuration table. In the resource configuration table, different indexes correspond to different resources. The first communication apparatus determines that the index corresponding to the first reserved resource in the resource configuration table is the second index, to send, to the second communication apparatus, the third indication information used to determine the first index and the second index. After receiving the third indication information, the second communication apparatus determines the first index and the second index, further determines a number of symbols of a resource (namely, the first resource) corresponding to the first index in the resource configuration table as the number, indicated by the first control information, of repetitions of the first feedback information, and determines a resource corresponding to the second index in the resource configuration table as the first reserved resource.

Optionally, the second index may be determined based on the first index. In this case, the second communication apparatus may determine the first index based on the third indication information, to determine, based on a preconfigured mapping relationship between indexes or a set of calculation manners, an index corresponding to the first index, namely, the second index.

Optionally, the third indication information may be the first index. Alternatively, the third indication information may be a fourth index. In this case, the second communication apparatus and the first communication apparatus may pre-agree on a set of calculation manners, and the set of calculation manners is used to calculate the index in the resource configuration table. After receiving the fourth index, the second communication apparatus substitutes the fourth index into the set of calculation manners for calculation, to obtain the first index, so as to obtain the second index based on the first index.

For example, it is assumed that the resource configuration table is Table 1, and the third indication information is an index 1. The second communication apparatus substitutes the index 1 into a pre-agreed calculation manner, to obtain an index 0 through calculation. In the preconfigured mapping relationship, the index 0 corresponds to an index 11. The second communication apparatus determines that a number of symbols of a PUCCH resource corresponding to the index 0 in Table 1 is 2, to determine that the number, indicated by the first control information, of repetitions of the first feedback information is 2. The second communication apparatus determines that, in Table 1, a PUCCH resource corresponding to the index 11 starts from a symbol 0 and occupies 14 symbols, and a PRB offset is 0. In this case, the resource is the first reserved resource.

It can be learned that, according to this solution, the third indication information can implicitly indicate a number of repetitions of the first feedback information by using the first index.

Optionally, in a scenario in which the second index may be determined based on the first index, the second communication apparatus may determine whether the first index or the resource corresponding to the first index meets a preset condition, further determine the second index based on the first index if it is determined that the preset condition is met, and determine a number of symbols of the resource corresponding to the first index as the number, indicated by the first control information, of repetitions of the first feedback information. If it is determined that the preset condition is not met, the resource corresponding to the first index is determined as the first reserved resource, and the second index does not need to be determined based on the first index.

The preset condition may be that the number of symbols of the first resource is less than (or does not exceed) a first preset threshold. Alternatively, the preset condition may be that a value of the first index is less than (or does not exceed) a second preset threshold.

For example, it is assumed that the preset condition is that the number of symbols of the first resource is less than 14. If the second communication apparatus determines that the number of symbols of the resource corresponding to the first index in the resource configuration table is 4, the second communication apparatus further determines the second index based on the first index, and determines that the number, indicated by the first control information, of repetitions of the first feedback information is 4. If the second communication apparatus determines that the number of symbols of the resource corresponding to the first index in the resource configuration table is 14, the second communication apparatus determines the resource corresponding to the first index as the first reserved resource.

When a long sequence is used for a downlink resource, a large number of symbols are occupied, and decoding performance is good. However, compared with the long sequence, a short sequence occupies fewer symbols, and decoding performance is poorer. Therefore, for downlink information that needs repetition, a long sequence manner may be generally used, a number of occupied symbols of a corresponding resource is greater than a threshold. Therefore, according to this solution, when the obtained number of symbols of the resource corresponding to the first index is less than the threshold, the number of symbols of the resource may implicitly indicate repetitions of the first feedback information, and the second index is further obtained based on the first index, to determine the first reserved resource.

Optionally, the second communication apparatus may determine whether the first index or the first resource corresponding to the first index meets a preset condition, and may further determine whether the second index or the resource corresponding to the second index meets another preset condition. If at least one of the two preset conditions is not met, the first resource is determined as the first reserved resource.

One preset condition may be that the number of symbols of the first resource is less than (or does not exceed) a first preset threshold. Alternatively, one preset condition may be that a value of the first index is less than (or does not exceed) a second preset threshold. The other preset condition may be that a number of symbols of the resource corresponding to the second index is not less than (or greater than) a third preset threshold. Alternatively, the other preset condition may be that a value of the second index is not less than (or greater than) a fourth preset threshold. The third preset threshold may be the same as or different from the first preset threshold. The fourth preset threshold may be the same as or different from the second preset threshold.

For example, in the foregoing two implementations of indicating the first reserved resource and the number of repetitions of the first feedback information, for a resource configuration table preconfigured by the second communication apparatus and the first communication apparatus, refer to Table 1. Certainly, the second communication apparatus and the first communication apparatus may alternatively preconfigure another resource configuration table.

For example, in the foregoing two implementations of indicating the first reserved resource and the number of repetitions of the first feedback information, the second communication apparatus and the first communication apparatus pre-agree on a set of calculation manners used to calculate the index in the resource configuration table. For details, refer to a calculation manner used to calculate the index in Table 1 in an existing protocol. Certainly, the second communication apparatus and the first communication apparatus may alternatively pre-agree on another calculation manner.

The foregoing describes how the first control information indicates the first reserved resource and the number of repetitions of the first feedback information. The following describes how the second communication apparatus determines the one or more reserved resources and the actual number of repetitions of the first feedback information.

For the actual number of repetitions of the first feedback information, if the capability of repetition of the first feedback information by the second communication apparatus cannot meet the number, indicated by the first control information, of repetitions of the first feedback information, the second communication apparatus may send the first feedback information based on a maximum number, supported by the second communication apparatus, of repetitions of the first feedback information.

For example, it is assumed that the number, indicated by the first control information, of repetitions of the first feedback information is 2, but the second communication apparatus can support only sending the first feedback information once. In this case, the second communication apparatus may send the first feedback information once.

If the capability of repetition of the first feedback information by the second communication apparatus can meet the number, indicated by the first control information, of repetitions of the first feedback information, the second communication apparatus may send the first feedback information based on the number, indicated by the first control information, of repetitions of the first feedback information.

For example, it is assumed that the number, indicated by the first control information, of repetitions of the first feedback information is 2, and the second communication apparatus supports sending the first feedback information twice. In this case, the second communication apparatus may send the first feedback information twice based on an indication of the first control information.

To determine the one or more reserved resources, first, the second communication apparatus may determine, as the number of the one or more reserved resources, the number, indicated by the first control information, of repetitions of the first feedback information.

It may be understood that, when there is one reserved resource, the first reserved resource is the only resource that is reserved by the first communication apparatus for the first communication apparatus and that is used to send the first feedback information. After determining the first reserved resource based on the first control information, the second communication apparatus does not need to determine the reserved resource.

When there are a plurality of reserved resources, there is a position relationship between a reserved resource other than the first reserved resource in the plurality of reserved resources and the first reserved resource in time domain and/or frequency domain. After determining the first reserved resource based on the first control information, the second communication apparatus may determine another reserved resource based on the first reserved resource and the position relationship, to determine the plurality of reserved resources.

Optionally, a position relationship between the first reserved resource and the another reserved resource may be pre-agreed on by the first communication apparatus and the second communication apparatus. Alternatively, the first communication apparatus may indicate the position relationship to the second communication apparatus by using indication information sent to the second communication apparatus. The indication information may be sent in a unicast or broadcast manner. For example, the indication information may be carried in the first control information, or may be carried in the broadcast system information, or may be carried in the MsgB/Msg4.

Optionally, a position relationship between the first reserved resource and the another reserved resource may be that the plurality of reserved resources are arranged consecutively in time domain, and a time domain position of the first reserved resource in the plurality of reserved resources is the frontmost or the rearmost. Alternatively, the plurality of reserved resources may be arranged at a specific interval in time domain, and a time domain position of the first reserved resource in the plurality of reserved resources is the frontmost or the rearmost. Generally, arrangement of the plurality of reserved resources in time domain has small impact on another user, but arrangement of the plurality of reserved resources in frequency domain can enable the user to complete feedback more quickly with a small delay. Optionally, the arrangement may be performed in both time domain and frequency domain.

For example, as shown in FIG. 6, it is assumed that there are four reserved resources. The first reserved resource and the other three reserved resources may be arranged consecutively in time domain, or may be arranged at a specific interval.

Optionally, a position relationship between the first reserved resource and the another reserved resource may be that the plurality of reserved resources are arranged consecutively in frequency domain, and a frequency domain position of the first reserved resource in the plurality of reserved resources is at a topmost end or a bottommost end. Alternatively, the plurality of reserved resources may be arranged at a specific interval in frequency domain, and a frequency domain position of the first reserved resource in the plurality of reserved resources is at a topmost end or a bottommost end.

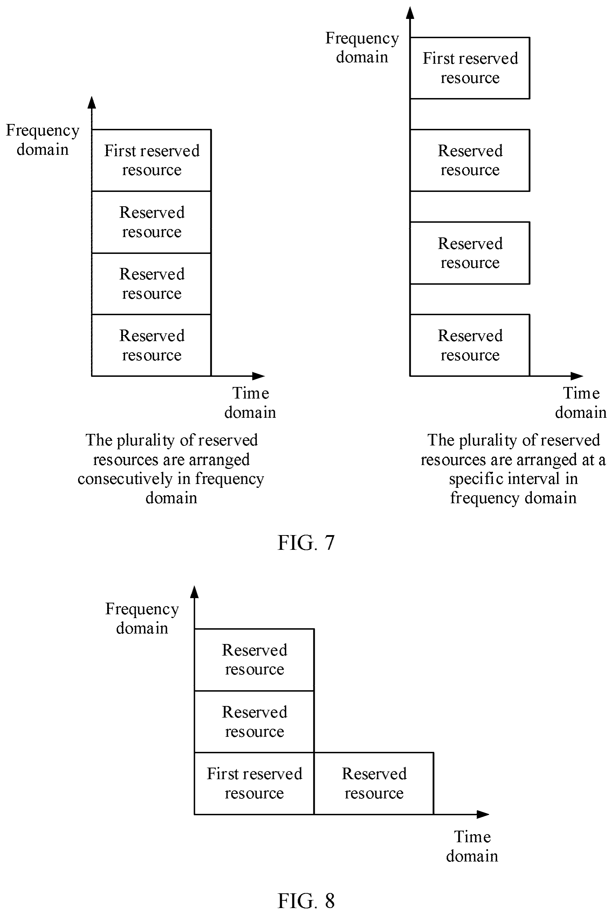

For example, as shown in FIG. 7, it is assumed that there are four reserved resources. The first reserved resource and the other three reserved resources may be consecutive in frequency domain, or may be arranged at a specific interval.

Optionally, a position relationship between the first reserved resource and the another reserved resource may correspond to the number, indicated by the first control information, of repetitions of the first feedback information.

Optionally, a correspondence between the position relationship between the first reserved resource and the another reserved resource and the number, indicated by the first control information, of repetitions of the first feedback information may be pre-agreed on by the first communication apparatus and the second communication apparatus. Alternatively, the first communication apparatus may indicate the correspondence to the second communication apparatus by using indication information sent to the second communication apparatus. For example, the first communication apparatus sends seventh indication information to the second communication apparatus, where the seventh indication information indicates the correspondence between the position relationship and the number of repetitions of the first feedback information. The seventh indication information may be sent in a unicast or broadcast manner. For example, the seventh indication information may be carried in the first control information, or may be carried in the broadcast system information, or may be carried in the MsgB/Msg4.

For example, it is assumed that the first communication apparatus and the second communication apparatus agree on that when the number, indicated by the first control information, of repetitions of the first feedback information is equal to 2, the other reserved resource and the first reserved resource are arranged consecutively in time domain. When the number, indicated by the first control information, of repetitions of the first feedback information is equal to 4, one reserved resource and the first reserved resource are arranged consecutively in time domain, and the other two reserved resources and the first reserved resource are arranged consecutively in frequency domain. When the number, indicated by the first control information, of repetitions of the first feedback information is equal to 8, three reserved resources and the first reserved resource are arranged consecutively in time domain, and the other four reserved resources and the first reserved resource are arranged consecutively in frequency domain. In this example, when the number, indicated by the first control information, of repetitions of the first feedback information is equal to 4, a diagram of a position relationship between the plurality of reserved resources may be shown in FIG. 8.

For another example, the first communication apparatus and the second communication apparatus may agree on that when the number, indicated by the first control information, of repetitions of the first feedback information is less than or equal to 4, the other reserved resources and the first reserved resource are arranged consecutively in time domain, and when the number, indicated by the first control information, of repetitions of the first feedback information is greater than 4, the other reserved resources and the first reserved resource are arranged consecutively in frequency domain. Certainly, in this example, consecutive arrangement may alternatively be replaced with arrangement at a specific interval.

In other words, the plurality of reserved resources may meet at least one of the following relationships:

in the plurality of reserved resources, two time-frequency resources that are adjacent in time domain are consecutive in time domain;
in the plurality of reserved resources, two reserved resources that are adjacent in frequency domain are consecutive in frequency domain;
in the plurality of reserved resources, intervals between two reserved resources that are adjacent in time domain are the same; and
in the plurality of reserved resources, intervals between two reserved resources that are adjacent in frequency domain are the same.

Optionally, the first communication apparatus may send eighth indication information to the second communication apparatus, where the eighth indication information indicates the interval between the two reserved resources that are adjacent in time domain and/or the interval between the two reserved resources that are adjacent in frequency domain. The eighth indication information may be sent in a unicast or broadcast manner. For example, the eighth indication information may be carried in the first control information, or may be carried in the broadcast system information, or may be carried in the MsgB/Msg4.

Optionally, after sending the first control information, the first communication apparatus may further send the MsgB or the Msg4 to the second communication apparatus. In the 2-step random access scenario, the first communication apparatus sends the MsgB. In the 4-step random access scenario, the first communication apparatus sends the Msg4.

Further, after receiving the MsgB or the Msg4, the second communication apparatus may send the first feedback information through the reserved resource. If the actual number, determined by the second communication apparatus, of repetitions of the first feedback information is less than the number, indicated by the first control information, of repetitions of the first feedback information, the second communication apparatus may select a reserved resource from the one or more reserved resources to send the first feedback information (for example, the reserved resource may be randomly selected, or a reserved resource at a front time domain position may be selected). If the actual number, determined by the second communication apparatus, of repetitions of the first feedback information is the number, indicated by the first control information, of repetitions of the first feedback information, the second communication apparatus may send the first feedback information through each reserved resource.

Correspondingly, after sending the MsgB or the Msg4, the first communication apparatus may attempt to receive the first feedback information on each reserved resource. In other words, the first communication apparatus may receive the first feedback information through the one or more reserved resources.

It should be noted that, in the foregoing method embodiment, the first control information may be replaced with corresponding downlink information, and the random access method provided in this embodiment of this application is still applicable. For example, in the 2-step random access scenario, the first control information may be replaced with the MsgB, and the MsgB indicates the first reserved resource and the number of repetitions of the first feedback information. In the 4-step random access scenario, the first control information may be replaced with the Msg4, and the Msg4 indicates the first reserved resource and the number of repetitions of the first feedback information. For specific implementation, refer to the foregoing method embodiment.

An embodiment of this application may further provide another random access method. The random access method includes steps S901 and S902.

S901: A second communication apparatus determines a number of repetitions of a first signal from a first communication apparatus.

S902: The second communication apparatus determines a number of repetitions of first feedback information based on the number of repetitions of the first signal.

For details of the first feedback information, refer to the descriptions in S501. Details are not described herein again.

The first signal is a downlink signal sent by the first communication apparatus to the second communication apparatus in a random access procedure before the second communication apparatus sends the first feedback information. For example, in a 2-step random access scenario, the first signal may be a Msg3. In a 4-step random access scenario, the first signal may be a MsgA.

For S901, optionally, the second communication apparatus may determine the number of repetitions of the first signal based on indication information that is from the first communication apparatus and that indicates the number of repetitions of the first signal. For example, the first communication apparatus may indicate, by using the indication information, that the number of repetitions of the first signal is N, where N may be an integer greater than or equal to 1.

Alternatively, the second communication apparatus may determine the number of repetitions of the first signal based on a number of receptions of the first signal.

For S902, in a possible implementation, the second communication apparatus and the first communication apparatus may pre-agree on a relationship between the number of repetitions of the first signal and the number of repetitions of the first feedback information, and the second communication apparatus may determine the number of repetitions of the first feedback information based on the pre-agreed relationship and the number of repetitions of the first signal.

For example, it is assumed that a number of repetitions of the first feedback information is M, and the number of repetitions of the first signal is N. The second communication apparatus and the first communication apparatus may pre-agree on M=2*N or M=N+K. A value of K is also pre-agreed on by the second communication apparatus and the first communication apparatus.

In another possible implementation, the first communication apparatus may send indication information to the second communication apparatus, to indicate a relationship between the number of repetitions of the first signal and the number of repetitions of the first feedback information. The second communication apparatus may determine the number of repetitions of the first feedback information based on the indication information and the number of repetitions of the first signal.

Optionally, the first communication apparatus may send the indication information in a broadcast or unicast manner. If the indication information is sent in the broadcast manner, the indication information may be carried in system information, for example, a SIB1. If the indication information is sent in the unicast manner, the indication information may be carried in information for scheduling a MsgB/Msg4, or the indication information may be carried in the MsgB/Msg4.

For example, it is assumed that a number of repetitions of the first feedback information is M, and the number of repetitions of the first signal is N. The first communication apparatus sends the indication information to the second communication apparatus, to indicate M=2*N.

In another possible implementation, the second communication apparatus may determine the number of repetitions of the first feedback information based on both a relationship pre-agreed on by the second communication apparatus and the first communication apparatus and a value, indicated by the first communication apparatus, in the pre-agreed relationship.

Optionally, the first communication apparatus may send the indication information in a broadcast or unicast manner. If the indication information is sent in the broadcast manner, the indication information may be carried in system information, for example, a SIB1. If the indication information is sent in the unicast manner, the indication information may be carried in information for scheduling a MsgB/Msg4, or the indication information may be carried in the MsgB/Msg4.

For example, it is assumed that a number of repetitions of the first feedback information is M, and the number of repetitions of the first signal is N. The second communication apparatus and the first communication apparatus may pre-agree on M=N+K. A value of K may be indicated by the indication information sent by the first communication apparatus to the second communication apparatus.

In another possible implementation, the second communication apparatus may determine the number of repetitions of the first feedback information based on both a relationship pre-agreed on by the second communication apparatus and the first communication apparatus and a value, determined by the second communication apparatus, in the pre-agreed relationship.

Optionally, in this implementation, the value, determined by the second communication apparatus, in the pre-agreed relationship may be generated by the second communication apparatus. Alternatively, the value may be a value selected from one or more candidate values indicated by the first communication apparatus to the second communication apparatus.

Further, in this implementation, the second communication apparatus may indicate, to the first communication apparatus, the value, determined by the second communication apparatus, in the pre-agreed relationship. Optionally, the second communication apparatus may directly indicate a value, or may indicate an index corresponding to the value. The index corresponding to the value may be determined based on an index corresponding to one or more candidate values indicated by the first communication apparatus to the second communication apparatus.

Optionally, information that is sent by the second communication apparatus to the first communication apparatus and that indicates the value may be carried in the MsgA (in the 2-step random access scenario) or the Msg3 (in the 4-step random access scenario).

For example, it is assumed that a number of repetitions of the first feedback information is M, and the number of repetitions of the first signal is N. The second communication apparatus and the first communication apparatus may pre-agree on M=N+K. A value of K may be generated by the second communication apparatus, and the value of K is indicated to the first communication apparatus by using indication information. Alternatively, a value of K may be a value selected by the second communication apparatus from one or more candidate values indicated by the first communication apparatus. It is assumed that, in the one or more candidate values, the value of K corresponds to an index 1, and the second communication apparatus may indicate an index 2 to the first communication apparatus by using indication information.

Optionally, the second communication apparatus may further determine one or more reserved resources, where the one or more reserved resources are used to send the first feedback information. For a specific determining manner, refer to the foregoing descriptions of S501 to S503. Details are not described herein again.

It should be noted that, if another random access form newly appears, the random access method including S901 and S902 provided in this embodiment of this application may also be applied to the newly-appearing random access scenario. The Msg3/MsgA in the descriptions of S901 and S902 may be correspondingly replaced with other uplink information in another random access scenario, and a MsgB/Msg4 in the following descriptions may be correspondingly replaced with other downlink information in the another random access scenario.

It may be understood that, in the foregoing embodiments, the method and/or the step implemented by the first communication apparatus may also be implemented by a component (for example, a chip or a circuit) that can be used in the first communication apparatus, or an apparatus including the first communication apparatus. The method and/or the step implemented by the second communication apparatus may also be implemented by a component (for example, a chip or a circuit) that can be used in the second communication apparatus, or an apparatus including the second communication apparatus.

Correspondingly, an embodiment of this application further provides a communication apparatus configured to implement the foregoing embodiments. It may be understood that, to implement the foregoing functions, the communication apparatus includes a corresponding hardware structure and/or software module for performing each function. A person skilled in the art should be easily aware that, in combination with units and algorithm steps of the examples described in embodiments disclosed in this specification, this application can be implemented in a form of hardware or combination of hardware and computer software. Whether a function is implemented by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, functional modules may be obtained through division based on corresponding functions, or two or more functions may be integrated into one processing module. The integrated module may be implemented in a form of hardware, or may be implemented in a form of software functional module. It should be noted that, in embodiments of this application, module division is an example, and is merely logical function division. During actual implementation, another division manner may be used.

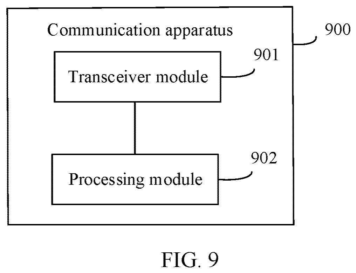

When the functional modules are obtained through division based on the corresponding functions, FIG. 9 is a diagram of a possible structure of the communication apparatus in the foregoing embodiment. As shown in FIG. 9, an apparatus 900 includes a transceiver module 901 and a processing module 902.

For example, the communication apparatus 900 is the second communication apparatus in the foregoing embodiments. In a possible implementation, the transceiver module 901 is configured to perform S501 to S503, S901 and S902, and/or an information/data receiving and sending-related method and an information/data sending-related method that are performed by the second communication apparatus and that are in another process of the technical solutions described in this specification. The processing module 902 is configured to perform S501 to S503, and/or an information/data processing-related method that is performed by the second communication apparatus and that is in another process of the technical solutions described in this specification.

For example, the communication apparatus 900 is the first communication apparatus in the foregoing embodiments. In a possible implementation, the transceiver module 901 is configured to perform S501 to S503, S901 and S902, and/or an information/data receiving and sending-related method and an information/data sending-related method that are performed by the first communication apparatus and that are in another process of the technical solutions described in this specification. The processing module 902 is configured to perform S501 to S503, and/or an information/data processing-related method that is performed by the first communication apparatus and that is in another process of the technical solutions described in this specification.

It should be noted that all related content of the steps in the foregoing method embodiments may be cited in function description of corresponding functional modules. Details are not described herein again.

In this embodiment, the communication apparatus 900 is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 900 may be in a form of the terminal device shown in FIG. 3.

For example, the processor 401 in the terminal device shown in FIG. 3 may invoke the computer-executable instructions stored in the memory 402, so that the communication apparatus 900 performs the random access method in the foregoing method embodiments. Specifically, functions/implementation processes of the transceiver module 901 and the processing module 902 in FIG. 9 may be implemented by the processor 401 shown in FIG. 3 by invoking the computer-executable instructions stored in the memory 402. Alternatively, functions/implementation processes of the processing module 902 in FIG. 9 may be implemented by the processor 401 shown in FIG. 3 by invoking the computer-executable instructions stored in the memory 402, and functions/implementation processes of the transceiver module 901 in FIG. 9 may be implemented through the communication interface 403 shown in FIG. 3.

In a simple embodiment, a person skilled in the art may figure out that the communication apparatus 900 may be in a form of the network device shown in FIG. 3.

For example, the processor 301 in the network device shown in FIG. 3 may invoke the computer-executable instructions stored in the memory 302, so that the communication apparatus 900 performs the random access method in the foregoing method embodiments. Specifically, functions/implementation processes of the transceiver module 901 and the processing module 902 in FIG. 9 may be implemented by the processor 301 shown in FIG. 3 by invoking the computer-executable instructions stored in the memory 302. Alternatively, functions/implementation processes of the processing module 902 in FIG. 9 may be implemented by the processor 301 shown in FIG. 3 by invoking the computer-executable instructions stored in the memory 302, and functions/implementation processes of the transceiver module 901 in FIG. 9 may be implemented through the communication interface 303 shown in FIG. 3.

The communication apparatus 900 provided in this embodiment may perform the foregoing communication method. Therefore, for technical effects that can be achieved by the communication apparatus 900, refer to the foregoing method embodiments. Details are not described herein again.

It should be noted that one or more of the foregoing modules or units may be implemented by using software, hardware, or a combination thereof. When any one of the foregoing modules or units is implemented by using software, the software exists in a form of computer program instructions, and is stored in the memory. The processor may be configured to execute the program instructions and implement the foregoing method procedures. The processor may be built into a SoC (System on Chip) or an ASIC, or may be an independent semiconductor chip. In addition to a core that is configured to execute software instructions to perform operations or processing, the processor may further include a necessary hardware accelerator, for example, a field programmable gate array (field programmable gate array, FPGA), a programmable logic device (programmable logic device, PLD), or a logic circuit that implements dedicated logic operations.

When the foregoing modules or units are implemented by using hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software, to perform the foregoing method procedures.

**EP 4 661 580 A1**

Optionally, an embodiment of this application further provides a chip system, including: at least one processor and an interface, where the at least one processor is coupled to a memory through the interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete device. This is not specifically limited in embodiments of this application.

All or a part of the foregoing embodiments may be implemented by using software, hardware, firmware, or any combination thereof. When a software program is used to implement embodiments, embodiments may be implemented completely or partially in a form of computer program product.

This application provides a computer program product, including one or more computer instructions. When the one or more computer instructions are run on a communication apparatus, any method in embodiments of this application is performed.

When the computer program instructions are loaded and executed on a computer, a part or all of the procedures or functions according to embodiments of this application are generated. The computer may be a general-purpose computer, a dedicated computer, a computer network, or another programmable apparatus.

The computer instructions may be stored in a computer-readable storage medium. An embodiment of this application provides a computer-readable storage medium. The computer-readable storage medium stores instructions. When the instructions are run on a communication apparatus, any method in embodiments of this application is performed.

The computer instructions may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the term "comprise" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the protection scope of this application. Correspondingly, the specification and accompanying drawings are merely example descriptions of this application defined by the appended claims, and are considered as any of or all modifications, variations, combinations or equivalents that cover the scope of this application. This application is intended to cover these modifications and variations of this application provided that they fall within the scope of the claims of this application and equivalent technologies thereof.

## Claims

1. A random access method, wherein the method comprises:

   receiving first control information, wherein the first control information indicates a first reserved resource and a number of repetitions of first feedback information, the number of repetitions of the first feedback information is greater than or equal to 1, the first feedback information indicates a decoding result of a message B MsgB or a decoding result of a message 4 Msg4, the first reserved resource is one of one or more reserved resources, a number of the one or more reserved resources is the same as the number of repetitions of the first feedback information, and each of the one or more reserved resources is used for sending the first feedback information once; and
   determining the one or more reserved resources based on the first control information.

2. The method according to claim 1, wherein the method further comprises:

receiving the MsgB or the Msg4; and
sending the first feedback information through the one or more reserved resources.

3. The method according to claim 1 or 2, wherein the method further comprises:
sending first indication information, wherein the first indication information indicates a capability of repetition of the first feedback information.

4. The method according to claim 1 or 2, wherein the method further comprises:
sending second indication information, wherein the second indication information indicates to request for repetition of the first feedback information.

5. The method according to claim 4, wherein that the second indication information indicates to request for repetition of the first feedback information comprises:
the second indication information indicates a requested number of repetitions of the first feedback information.

6. The method according to any one of claims 1 to 5, wherein the first control information comprises third indication information, the third indication information is used to determine a first index and a second index, the first index is an index corresponding to a first resource, the second index is an index corresponding to the first reserved resource, and the number of repetitions of the first feedback information is the same as a number of symbols of the first resource.

7. The method according to claim 6, wherein the method further comprises:

determining the first index based on the third indication information, and determining the first resource based on the first index; and
when the number of symbols of the first resource is less than a first preset threshold, determining the second index based on the first index.

8. The method according to claim 7, wherein the first control information comprises fourth indication information and fifth indication information, the fourth indication information indicates the number of repetitions of the first feedback information, and the fifth indication information indicates the first reserved resource.

9. The method according to claim 8, wherein the method further comprises:

receiving sixth indication information, wherein the sixth indication information indicates one or more candidate numbers of repetitions; and
that the fourth indication information indicates the number of repetitions of the first feedback information comprises:
the fourth indication information is an index corresponding to the number of repetitions of the first feedback information in the one or more candidate numbers of repetitions.

10. The method according to any one of claims 1 to 9, wherein
sizes of all the reserved resources are the same.

11. The method according to any one of claims 1 to 10, wherein a position relationship between a reserved resource other than the first reserved resource in the plurality of reserved resources and the first reserved resource in time domain and/or frequency domain corresponds to the number of repetitions of the first feedback information.

12. The method according to claim 11, wherein the method further comprises:
receiving seventh indication information, wherein the seventh indication information indicates a correspondence between the position relationship and the number of repetitions of the first feedback information.

13. The method according to any one of claims 1 to 12, wherein the plurality of reserved resources meet at least one of the following relationships:

in the plurality of reserved resources, two time-frequency resources that are adjacent in time domain are consecutive in time domain;
in the plurality of reserved resources, two reserved resources that are adjacent in frequency domain are consecutive in frequency domain;

in the plurality of reserved resources, intervals between two reserved resources that are adjacent in time domain are the same; and

in the plurality of reserved resources, intervals between two reserved resources that are adjacent in frequency domain are the same.

14. The method according to claim 13, wherein the method further comprises:
receiving eighth indication information, wherein the eighth indication information indicates the interval between the two reserved resources that are adjacent in time domain and/or the interval between the two reserved resources that are adjacent in frequency domain.

15. A random access method, comprising:

determining first control information, wherein the first control information indicates a first reserved resource and a number of repetitions of first feedback information, the number of repetitions of the first feedback information is greater than or equal to 1, the first feedback information indicates a decoding result of a message B MsgB or a decoding result of a message 4 Msg4, the first reserved resource is one of one or more reserved resources, a number of the one or more reserved resources is the same as the number of repetitions of the first feedback information, and each of the one or more reserved resources is used for transmitting the first feedback information once; and

sending the first control information.

16. The method according to claim 15, wherein the method further comprises:

sending the MsgB or the Msg4; and

receiving the first feedback information through the one or more reserved resources.

17. The method according to claim 15 or 16, wherein the method further comprises:
receiving first indication information, wherein the first indication information indicates a capability of repetition of the first feedback information.

18. The method according to claim 15 or 16, wherein the method further comprises:
receiving second indication information, wherein the second indication information indicates to request for repetition of the first feedback information.

19. The method according to claim 18, wherein that the second indication information indicates to request for repetition of the first feedback information comprises:
the second indication information indicates a requested number of repetitions of the first feedback information.

20. The method according to any one of claims 15 to 19, wherein the first control information comprises third indication information, the third indication information is used to determine a first index and a second index, the first index is an index corresponding to a first resource, the second index is an index corresponding to the first reserved resource, and the number of repetitions of the first feedback information is the same as a number of symbols of the first resource.

21. The method according to any one of claims 15 to 19, wherein the first control information comprises fourth indication information and fifth indication information, the fourth indication information indicates the number of repetitions of the first feedback information, and the fifth indication information indicates the first reserved resource.

22. The method according to any one of claims 15 to 21, wherein the method further comprises:

sending sixth indication information, wherein the sixth indication information indicates one or more candidate numbers of repetitions; and

that the fourth indication information indicates the number of repetitions of the first feedback information comprises:

the fourth indication information is an index corresponding to the number of repetitions of the first feedback information in the one or more candidate numbers of repetitions.

23. The method according to any one of claims 15 to 22, wherein
sizes of all the reserved resources are the same.

24. The method according to any one of claims 15 to 23, wherein a position relationship between a reserved resource other than the first reserved resource in the plurality of reserved resources and the first reserved resource in time domain and/or frequency domain corresponds to the number of repetitions of the first feedback information.

25. The method according to claim 24, wherein the method further comprises:
sending seventh indication information, wherein the seventh indication information indicates a correspondence between the position relationship and the number of repetitions of the first feedback information.

26. The method according to any one of claims 15 to 25, wherein the plurality of reserved resources meet at least one of the following relationships:

in the plurality of reserved resources, two reserved resources that are adjacent in time domain are consecutive in time domain;
in the plurality of reserved resources, two reserved resources that are adjacent in frequency domain are consecutive in frequency domain;
in the plurality of reserved resources, intervals between two reserved resources that are adjacent in time domain are the same; and
in the plurality of reserved resources, intervals between two reserved resources that are adjacent in frequency domain are the same.

27. The method according to claim 26, wherein the method further comprises:
sending eighth indication information, wherein the eighth indication information indicates the interval between the two reserved resources that are adjacent in time domain and/or the interval between the two reserved resources that are adjacent in frequency domain.

28. A communication apparatus, wherein the apparatus comprises a transceiver module and a processing module, wherein

the transceiver module is configured to receive first control information, wherein the first control information indicates a first reserved resource and a number of repetitions of first feedback information, the number of repetitions of the first feedback information is greater than or equal to 1, the first feedback information indicates a decoding result of a message B MsgB or a decoding result of a message 4 Msg4, the first reserved resource is one of one or more reserved resources, a number of the one or more reserved resources is the same as the number of repetitions of the first feedback information, and each of the one or more reserved resources is used for sending the first feedback information once; and
the processing module is configured to determine the one or more reserved resources based on the first control information.

29. The apparatus according to claim 28, wherein the transceiver module is further configured to: receive the MsgB or the Msg4; and send the first feedback information through the one or more reserved resources.

30. The apparatus according to claim 28 or 29, wherein the transceiver module is further configured to send first indication information, wherein the first indication information indicates a capability of repetition of the first feedback information.

31. The apparatus according to claim 28 or 29, wherein the transceiver module is further configured to send second indication information, wherein the second indication information indicates to request for repetition of the first feedback information.

32. The apparatus according to claim 31, wherein that the second indication information indicates to request for repetition of the first feedback information comprises:
the second indication information indicates a requested number of repetitions of the first feedback information.

33. The apparatus according to any one of claims 28 to 32, wherein the first control information comprises third indication information, the third indication information is used to determine a first index and a second index, the first index is an index corresponding to a first resource, the second index is an index corresponding to the first reserved resource, and the number of repetitions of the first feedback information is the same as a number of symbols of the first resource.

34. The apparatus according to claim 33, wherein the processing module is further configured to: determine the first index based on the third indication information, and determine the first resource based on the first index; and
when the number of symbols of the first resource is less than a first preset threshold, determine the second index based on the first index.

35. The apparatus according to any one of claims 28 to 32, wherein the first control information comprises fourth indication information and fifth indication information, the fourth indication information indicates the number of repetitions of the first feedback information, and the fifth indication information indicates the first reserved resource.

36. The apparatus according to claim 35, wherein the transceiver module is further configured to receive sixth indication information, wherein the sixth indication information indicates one or more candidate numbers of repetitions; and that the fourth indication information indicates the number of repetitions of the first feedback information comprises: the fourth indication information is an index corresponding to the number of repetitions of the first feedback information in the one or more candidate numbers of repetitions.

37. The apparatus according to any one of claims 28 to 36, wherein
sizes of all the reserved resources are the same.

38. The apparatus according to any one of claims 28 to 37, wherein a position relationship between a reserved resource other than the first reserved resource in the plurality of reserved resources and the first reserved resource in time domain and/or frequency domain corresponds to the number of repetitions of the first feedback information.

39. The apparatus according to claim 38, wherein the transceiver module is further configured to receive seventh indication information, wherein the seventh indication information indicates a correspondence between the position relationship and the number of repetitions of the first feedback information.

40. The apparatus according to any one of claims 28 to 39, wherein the plurality of reserved resources meet at least one of the following relationships:

in the plurality of reserved resources, two time-frequency resources that are adjacent in time domain are consecutive in time domain;
in the plurality of reserved resources, two reserved resources that are adjacent in frequency domain are consecutive in frequency domain;
in the plurality of reserved resources, intervals between two reserved resources that are adjacent in time domain are the same; and
in the plurality of reserved resources, intervals between two reserved resources that are adjacent in frequency domain are the same.

41. The apparatus according to claim 40, wherein the transceiver module is further configured to receive eighth indication information, wherein the eighth indication information indicates the interval between the two reserved resources that are adjacent in time domain and/or the interval between the two reserved resources that are adjacent in frequency domain.

42. A communication apparatus, wherein the apparatus comprises a transceiver module and a processing module, wherein

the processing module is configured to determine first control information, wherein the first control information indicates a first reserved resource and a number of repetitions of first feedback information, the number of repetitions of the first feedback information is greater than or equal to 1, the first feedback information indicates a decoding result of a message B MsgB or a decoding result of a message 4 Msg4, the first reserved resource is one of one or more reserved resources, a number of the one or more reserved resources is the same as the number of repetitions of the first feedback information, and each of the one or more reserved resources is used for transmitting the first feedback information once; and
the transceiver module is configured to send the first control information.

43. The apparatus according to claim 42, wherein the transceiver module is further configured to: send the MsgB or the Msg4; and receive the first feedback information through the one or more reserved resources.

44. The apparatus according to claim 42 or 43, wherein the transceiver module is further configured to receive first indication information, wherein the first indication information indicates a capability of repetition of the first feedback information.

45. The apparatus according to claim 42 or 43, wherein the transceiver module is further configured to receive second indication information, wherein the second indication information indicates to request for repetition of the first feedback information.

46. The apparatus according to claim 45, wherein that the second indication information indicates to request for repetition of the first feedback information comprises: the second indication information indicates a requested number of repetitions of the first feedback information.

47. The apparatus according to any one of claims 42 to 46, wherein the first control information comprises third indication information, the third indication information is used to determine a first index and a second index, the first index is an index corresponding to a first resource, the second index is an index corresponding to the first reserved resource, and the number of repetitions of the first feedback information is the same as a number of symbols of the first resource.

48. The apparatus according to any one of claims 42 to 46, wherein the first control information comprises fourth indication information and fifth indication information, the fourth indication information indicates the number of repetitions of the first feedback information, and the fifth indication information indicates the first reserved resource.

49. The apparatus according to claim 48, wherein the transceiver module is further configured to send sixth indication information, wherein the sixth indication information indicates one or more candidate numbers of repetitions; and that the fourth indication information indicates the number of repetitions of the first feedback information comprises: the fourth indication information is an index corresponding to the number of repetitions of the first feedback information in the one or more candidate numbers of repetitions.

50. The apparatus according to any one of claims 42 to 49, wherein
sizes of all the reserved resources are the same.

51. The apparatus according to any one of claims 42 to 50, wherein a position relationship between a reserved resource other than the first reserved resource in the plurality of reserved resources and the first reserved resource in time domain and/or frequency domain corresponds to the number of repetitions of the first feedback information.

52. The apparatus according to claim 51, wherein the transceiver module is further configured to send seventh indication information, wherein the seventh indication information indicates a correspondence between the position relationship and the number of repetitions of the first feedback information.

53. The apparatus according to any one of claims 42 to 52, wherein the plurality of reserved resources meet at least one of the following relationships:

in the plurality of reserved resources, two reserved resources that are adjacent in time domain are consecutive in time domain;
in the plurality of reserved resources, two reserved resources that are adjacent in frequency domain are consecutive in frequency domain;
in the plurality of reserved resources, intervals between two reserved resources that are adjacent in time domain are the same; and
in the plurality of reserved resources, intervals between two reserved resources that are adjacent in frequency domain are the same.

54. The apparatus according to claim 53, wherein the transceiver module is further configured to send eighth indication information, wherein the eighth indication information indicates the interval between the two reserved resources that are adjacent in time domain and/or the interval between the two reserved resources that are adjacent in frequency domain.

55. A communication apparatus, wherein the communication apparatus comprises a processor, the processor is configured to execute instructions stored in a memory, and when the instructions are run by the processor, the communication apparatus is enabled to perform the method according to any one of claims 1 to 27.

**56.** The apparatus according to claim 55, wherein the communication apparatus further comprises the memory.

**57.** A computer-readable storage medium, wherein the computer-readable storage medium stores instructions, and when the instructions are executed by a computer, the method according to any one of claims 1 to 27 is performed.

**58.** A computer program product, wherein the computer program product comprises instructions, and when the instructions are executed by a computer, the method according to any one of claims 1 to 27 is performed.

**59.** A chip, wherein the chip comprises a processor, and the processor is configured to run instructions, to enable an apparatus comprising the chip to perform the method according to any one of claims 1 to 27.

**60.** The chip according to claim 59, wherein the chip further comprises a memory, and the memory is configured to store the instructions.

**61.** A communication system, wherein the communication system comprises a terminal device and a network device, the terminal device is configured to perform the method according to any one of claims 1 to 14, and the network device is configured to perform the method according to any one of claims 15 to 27.

FIG. 1

FIG. 2

FIG. 3

Terminal device

Antenna 1

Antenna 2

| Mobile communication module [450] | Wireless communication module [460] |

Audio module [470]

Processor [410]

Displays 1 to N [494]

Cameras 1 to N [493]

Button [490]

Internal memory [421]

SIM card interfaces 1 to N [495]

External memory interface [420]

Sensor module [480]

USB port [430]

Charging input

Charging management module [440]

Power management module [441]

Battery [442]

FIG. 4

First communication
apparatus

Second communication
apparatus

S501: Determine first control information,
where the first control information indicates
a first reserved resource and a number of
repetitions of first feedback information, and
the first feedback information indicates a
decoding result of a MsgB or a decoding
result of a Msg4

S502: First control information

S503: Determine one or more reserved
resources based on the first control
information

FIG. 5

| First reserved resource | Reserved resource | Reserved resource | Reserved resource |
|---|---|---|---|

The plurality of reserved resources are
arranged consecutively in time domain

Time
domain

| First reserved resource | Reserved resource | Reserved resource | Reserved resource |
|---|---|---|---|

The plurality of reserved resources are arranged
at a specific interval in time domain

Time
domain

FIG. 6

Frequency
domain

First reserved
resource

Reserved
resource

Reserved
resource

Reserved
resource

Time
domain

The plurality of reserved
resources are arranged
consecutively in frequency
domain

Frequency
domain

First reserved
resource

Reserved
resource

Reserved
resource

Reserved
resource

Time
domain

The plurality of reserved
resources are arranged at a
specific interval in
frequency domain

FIG. 7

Frequency
domain

Reserved
resource

Reserved
resource

First reserved
resource

Reserved
resource

Time
domain

FIG. 8

Communication apparatus — 900

Transceiver module — 901

Processing module — 902

FIG. 9

## INTERNATIONAL SEARCH REPORT

| International application No. |
|---|
| **PCT/CN2024/075291** |

**A.    CLASSIFICATION OF SUBJECT MATTER**

H04W 74/08(2024.01)i

According to International Patent Classification (IPC) or to both national classification and IPC

**B.    FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

3GPP, CNTXT, ENTXT, ENTXTC, WPABS, WPABSC: 反馈, 消息4, 消息B, 预留, 重复, 资源, 覆盖, 增强, 次数, feedback, message4, messageB, Msg4, MsgB, repetition, reservation, resource, coverage, enhancement, times

**C.    DOCUMENTS CONSIDERED TO BE RELEVANT**

| Category* | Citation of document, with indication, where appropriate, of the relevant passages | Relevant to claim No. |
|---|---|---|
| X | CN 115087125 A (HUAWEI TECHNOLOGIES CO., LTD.) 20 September 2022 (2022-09-20) description, paragraphs [0006]-[0317] | 1-61 |
| X | US 2019045552 A1 (TELEFONAKTIEBOLAGET LM ERICSSON (PUBL)) 07 February 2019 (2019-02-07) description, column 1, line 59 to column 14, line 33 | 1-61 |
| A | CN 110475374 A (HUAWEI TECHNOLOGIES CO., LTD.) 19 November 2019 (2019-11-19) entire document | 1-61 |
| A | CN 113366779 A (HUAWEI TECHNOLOGIES CO., LTD.) 07 September 2021 (2021-09-07) entire document | 1-61 |
| A | INTEL CORPORATION. "UCI and DL HARQ-ACK feedback for NB-IoT" *3GPP TSG RAN WG1 Meeting #84bis, R1-162980*, 15 April 2016 (2016-04-15), entire document | 1-61 |

☐ Further documents are listed in the continuation of Box C.          ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **19 April 2024** | **25 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/075291**

| Patent document cited in search report | | | Publication date (day/month/year) | Patent family member(s) | | | Publication date (day/month/year) |
|---|---|---|---|---|---|---|---|
| CN | 115087125 | A | 20 September 2022 | WO | 2022188685 | A1 | 15 September 2022 |
| | | | | EP | 4287749 | A1 | 06 December 2023 |
| US | 2019045552 | A1 | 07 February 2019 | EP | 3411976 | A1 | 12 December 2018 |
| | | | | WO | 2017135887 | A1 | 10 August 2017 |
| | | | | CN | 108886435 | A | 23 November 2018 |
| CN | 110475374 | A | 19 November 2019 | | None | | |
| CN | 113366779 | A | 07 September 2021 | WO | 2020155059 | A1 | 06 August 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310182890